(19) Europäisches Patentamt
European Patent Office
Office européen des brevets

(11) EP 3 461 851 B1

(12) EUROPÄISCHE PATENTSCHRIFT

(45) Veröffentlichungstag und Bekanntmachung des Hinweises auf die Patenterteilung:
**09.11.2022 Patentblatt 2022/45**

(21) Anmeldenummer: **18197369.4**

(22) Anmeldetag: **27.09.2018**

(51) Internationale Patentklassifikation (IPC):
***C08G 18/48*** *(2006.01)* ***C08G 18/61*** *(2006.01)*
***C08G 18/79*** *(2006.01)* ***C08G 18/12*** *(2006.01)*
***C08G 18/32*** *(2006.01)* ***C08G 18/38*** *(2006.01)*
***C08G 18/40*** *(2006.01)* ***C08G 18/42*** *(2006.01)*
***B60J 10/70*** *(2016.01)*

(52) Gemeinsame Patentklassifikation (CPC):
(C-Sets verfügbar)
**C08G 18/4841; C08G 18/12; C08G 18/3206; C08G 18/3876; C08G 18/4009; C08G 18/4238; C08G 18/4854; C08G 18/61; C08G 18/797** (Forts.)

(54) **POLYURETHANGIESSELASTOMER**

POLYURETHANE CAST ELASTOMER

ÉLASTOMÈRE MOULÉ DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2017 DE 102017217170**
**27.09.2017 EP 17193434**

(43) Veröffentlichungstag der Anmeldung:
**03.04.2019 Patentblatt 2019/14**

(73) Patentinhaber: **BASF SE**
**67056 Ludwigshafen am Rhein (DE)**

(72) Erfinder:
- **Jähnigen, Julia**
  **49152 Bad Essen (DE)**
- **Roy, Nabarun**
  **Wyandotte, MI Michigan 48192 (US)**
- **Petrovic, Dejan**
  **49448 Lemfoerde (DE)**
- **Bokern, Stefan**
  **Shanghai, Shanghai 200137 (CN)**
- **Mathieu, Thomas**
  **49448 Lemförde (DE)**
- **Kamm, Andre**
  **49448 Lemfoerde (DE)**
- **Susoff, Markus**
  **49448 Lemfoerde (DE)**

(74) Vertreter: **BASF IP Association**
**BASF SE**
**GBI-C006**
**67056 Ludwigshafen (DE)**

(56) Entgegenhaltungen:
**US-A1- 2005 154 173** **US-A1- 2017 029 554**
**US-B2- 7 157 528**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08G 18/12, C08G 18/61**

## Beschreibung

Die vorliegende Erfindung betrifft ein Polyurethangießelastomer erhältlich oder erhalten durch Umsetzung von mindestens den Komponenten (i) bis (iii): (i) eine Polyisocyanatzusammensetzung; (ii) eine Polyolzusammensetzung, umfassend (ii.1) mindestens ein zwei- oder dreifunktionales Polyester- oder Polyetherpolyol, (ii.2) mindestens ein Polysiloxan der allgemeinen Formel I; und (iii) eine Kettenverlängererzusammensetzung.

Die Erfindung betrifft weiterhin ein Verfahren zur Herstellung dieses Polyurethangießelastomers, dessen Verwendung und einen Formkörper umfassend das Polyurethangießelastomer, die Verwendung des Polyurethangießelastomers zur Herstellung von Formkörpern und umgossenen Formkörpern, sowie ein Verfahren zur Herstellung eines umgossenen Formkörpers.

Siliconelastomere besitzen eine ausgezeichnete Temperatur, UV-, und Witterungsstabilität. Sie behalten ihre elastischen Eigenschaften bei tieferen Temperaturen bei und neigen deshalb auch nicht zur Versprödung. Daneben besitzen sie spezielle wasserabweisende und antihaftende Oberflächeneigenschaften. Polyurethane und Polyurethangießelastomere für verschiedene Anwendungen, wie aus dem Stand der Technik grundsätzlich bekannt, können bei diesen Eigenschaften Nachteile zeigen. Durch die Kombination von Urethan- und Silicon-Polymeren werden Materialien mit guten mechanischen Eigenschaften zugänglich, die sich zugleich durch gegenüber den Siliconen stark vereinfachten Verarbeitungsmöglichkeiten auszeichnen, jedoch weiterhin positive Eigenschaften der Silicone besitzen. Für Polymerblends werden allerdings nicht in allen Fällen ausreichende Verträglichkeiten erreicht, außerdem unterscheiden sich die Eigenschaften von Polymerblends oftmals deutlich von denen der Ursprungspolymere. Nachteilig ist weiterhin, dass es oftmals zu einem "Ausblühen" oder einer Phasenmigration inkompatibler Siloxane kommt.

Abhängig von der Art der Anwendung können die Eigenschaften von Polyurethangießelastomeren durch die Art der Einsatzstoffe und die eingesetzten Mengenverhältnisse variiert werden. Für industrielle Anwendungen, wie Vergussmassen, Dichtungen, Räder und Rollen aber auch für diverse protektive Anwendungen wie Schutzhüllen sind oftmals verbesserte mechanische Eigenschaften, insbesondere Weiterreißfestigkeit und Reißdehnung nötig. Gleichfalls ist für Anwendungen, bei denen die Polyurethangießelastomere in direkten Kontakt mit der Außenwelt kommen, eine gute Beständigkeit gegenüber insbesondere Wärme und eine höhere Abriebfestigkeit wünschenswert.

Nachteilig ist allerdings, dass PU Systeme nicht als Formmaterial eingesetzt werden können, da die Haftung gegenüber anderen Reaktivsystemen, wie z.B. Polyurethan, Epoxid etc. zu hoch ist. Daher werden für den Formenbau oftmals Formen aus Silikonen oder Metallen eingesetzt, die diverse Nachteile mit sich bringen. Silikoneelastomere sind oft hochpreisig, schwierig zu verarbeiten und haben eine lange Aushärtezeit. Formkörper aus Metallen sind schwer, teuer und sehr aufwendig in Form zu bringen. Zudem muss mit Trennmitteln gearbeitet werden.

Eine der vorliegenden Erfindung zugrundeliegende Aufgabe bestand daher darin, ein Material bereitzustellen, das für den Formenbau geeignet ist und eine optimale Kombination aus Zykluszeit der Herstellung und trennenden Eigenschaften (antihaft) mit anderen Materialien bietet. Das entwickelte Material soll das Verfahren zur Herstellung von Formkörpern und umgossenen Formkörpern produktiver, einfacher und günstiger machen. Zudem sollen die Materialien verbesserte mechanische Eigenschaften, insbesondere Weiterreißfestigkeit und Reißdehnung, bereitstellen. Eine weitere der vorliegenden Erfindung zugrundeliegende Aufgabe war es, verbesserte Materialien bereitzustellen, die eine höhere Beständigkeit gegenüber Wärme, d.h. einen Erhalt ihrer mechanischen Eigenschaften auch bei erhöhten Temperaturen, und eine höhere Abriebfestigkeit aufweisen.

Erfindungsgemäß wird dieser Aufgabe gelöst durch ein Polyurethangießelastomer erhältlich oder erhalten durch Umsetzung von mindestens den Komponenten (i) bis (ii):

(i) eine Polyisocyanatzusammensetzung;
(ii) eine Polyolzusammensetzung, umfassend

(ii.1) mindestens ein zwei- oder dreifunktionales Polyester- oder Polyetherpolyol,
(ii.2) mindestens ein Polysiloxan der allgemeinen Formel I

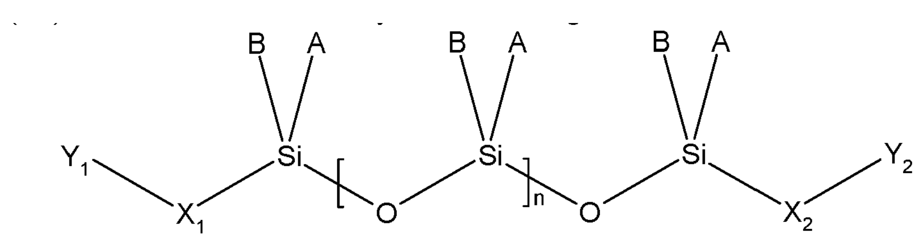

(I),

wobei n eine ganze Zahl im Bereich von 1 bis 250 ist, A und B unabhängig voneinander ausgewählt sind aus

der Gruppe der C1-C20-Alkylgruppen; wobei $X_1$ eine $(CH_2-CH_2-O)_m$-Gruppe, eine $(CH_2-CH_2-CH_2-O)_m$-Gruppe oder eine $(CHCH_3-CH_2-O)_m$-Gruppe ist, $X_2$ eine $(O-CH_2-CH_2)_m$-Gruppe eine $(O-CH_2-CH_2-CH_2)_m$-Gruppe oder eine $(O-CH_2-CHCH_3)_m$-Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind;

(iii) eine Kettenverlängererzusammensetzung.

Hierbei wird das Polysiloxan, welches einen hydrophoben Charakter aufweist, kovalent in die Matrix eingebaut, wodurch negative Effekte wie Ausblühen oder Phasenmigration unterbunden werden. Überraschenderweise weisen die erfindungsgemäßen Polyurethangießelastomere mit in die Matrix eingebautem Polysiloxan (Si-PU-Gießelastomer) eine höhere Abriebfestigkeit, sowie verbesserte Weiterreißfestigkeit und Reißdehnung auf, ohne dabei die Härte nachteilig zu beeinflussen. Ebenso ist die Beständigkeit gegenüber Hitze signifikant verbessert und die Glasübergangstemperatur zu tiefen Temperaturen verschoben. Erfindungsgemäße Polyurethangießelastomere haben eine Glasübergangstemperatur zwischen -150°C und +130°C, sowie einen breit einstellbaren Härtebereich im Bereich von 04 Shore OO bis 80 Shore D, bevorzugt im Bereich von 25 Shore OO bis 60 Shore D. Die Dichte ist dabei > 850 g/l.

Besonders ist zudem, dass der Faktor, der aus der Oberflächenenergie (OFE) der gereinigten Seite zu der OFE des Bulkmaterials der erfindungsgemäßen Gießelastomere bestimmt wird, im Bereich $\leq$ 0,85 liegt.

In einer bevorzugten Ausführungsform Polyurethangießelastomers ist der Index n des mindestens einen Polysiloxans gemäß (ii.2) eine ganze Zahl im Bereich von 3 bis 50 oder im Bereich von 100 bis 240.

Gemäß einer bevorzugten Ausführungsform des Polyurethangießelastomers sind A und B des Polysiloxans gemäß (ii.2) unabhängig voneinander ausgewählt aus der Gruppe der C1- bis C5-Alkylgruppen, bevorzugt sind A und B jeweils gleich und ausgewählt sind aus der Gruppe der C1- bis C5-Alkylgruppen, wobei weiter bevorzugt A und B beide eine Methylgruppe sind.

In einer bevorzugten Ausführungsform des Polyurethangießelastomers ist der Index m für $X_1$, $X_2$ des Polysiloxans gemäß (ii.2) jeweils unabhängig eine ganze Zahl im Bereich von 2 bis 15.

In einer besonders bevorzugten Ausführungsform des Polyurethangießelastomers ist der Index n des mindestens einen Polysiloxans gemäß (ii.2) eine ganze Zahl im Bereich von 3 bis 50, bevorzugt im Bereich von 5 bis 40, weiter bevorzugt im Bereich von 10 bis 20; $X_1$ des Polysiloxans gemäß (ii.2) ist eine $(CH_2-CH_2-O)_m$-Gruppe, $X_2$ des Polysiloxans gemäß (ii.2) ist eine $(O-CH_2-CH_2)_m$-Gruppe, wobei m für $X_1$, $X_2$ jeweils unabhängig eine ganze Zahl im Bereich von 2 bis 20, weiter bevorzugt im Bereich von 3 bis 15, ist; und $Y_1$ und $Y_2$ sind beide eine Hydroxylgruppe.

Der Anteil an $X_1 + Y_1 + X_2 + Y_2$ beträgt in einer bevorzugten Ausführungsform >10 Gewichts-%, bevorzugt im Bereich von 10 bis 95 Gewichts-%, weiter bevorzugt im Bereich von 15 bis 85 Gewichts-%, weiter bevorzugt im Bereich von 25 bis 75 Gewichts-%, jeweils bezogen auf das Gesamtgewicht des Polysiloxans gemäß (ii.2). Ebenso beträgt der entsprechende PDMS-Anteil des Polysiloxans $(Si(A,B)-(O-Si(A,B))_n-O-Si(A,B)) \leq 90$ Gewichts-%, bevorzugt im Bereich von 90 bis 5 Gewichts-%, weiter bevorzugt im Bereich von 85 bis 15 Gewichts-%, weiter bevorzugt im Bereich von 75 bis 25 Gewichts-%, jeweils bezogen auf das Gesamtgewicht des Polysiloxans gemäß (ii.2). Beim Einsatz von silikonbasierten Polyolen mit einem PDMS-Anteil von größer 90 Gewichts-% sind deutlich die mechanischen Eigenschaften, wie beispielsweise die Zugfestigkeit, verschlechtert bzw. beim Einsatz von silikonbasierten Polyolen mit einem PDMS-Anteil von $\leq$ 90 Gewichts-% ergeben sich deutlich bessere mechanische Eigenschaften wie beispielsweise eine signifikant bessere Zugfestigkeit. Gute Trenneigenschaften werden unabhängig vom PDMS-Anteil der Si-Polyole erzielt, jedoch leiden beim Einsatz von silikonbasierten Polyolen mit einem PDMS-Anteil von größer 90 Gewichts-% deutlich die mechanischen Eigenschaften, wie insbesondere die Zugfestigkeit.

In einer bevorzugten Ausführungsform des Polyurethangießelastomers ist das mindestens eine Polysiloxan gemäß (ii.2) in einem Anteil im Bereich von 0,1 bis 90 Gewichts-%, bevorzugt im Bereich von 1 bis 85 Gewichts-%, weiter bevorzugt im Bereich von 5 bis 50 Gewichts-%, bezogen auf das Gesamtgewicht aller Komponenten (i), (ii.1), (ii.2) und (iii) enthalten.

Erfindungsgemäß wird gemäß (ii.1) mindestens ein zwei- oder dreifunktionales Polyester- oder Polyetherpolyol, , eingesetzt, wobei erfindungsgemäß auch zwei oder mehr Polyester -oder Polyetherpolyole oder Mischungen von Polyester- und Polyetherpolyolen eingesetzt werden können. Unter einem "xx-funktionalen Polyester- oder Polyetherpolyol" wird ein nominal xx-funktionales Polyester- oder Polyetherpolyol verstanden. In der Praxis wird von der nominalen Funktionalität abgewichen, da verschiedene Nebenreaktionen während der Polyol-Synthese zu einer Funktionalität führen kann, die real niedriger sein kann als nominal angenommen. Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1.

Geeignete Polyesterpolyole sind dem Fachmann an sich bekannt. Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure,

Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250 °C, vorzugsweise 180 bis 220 °C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2 polykondensiert.

Die eingesetzten Polyesterpolyole besitzen vorzugsweise eine Funktionalität von 2 bis 4, insbesondere von 2 bis 3, und beispielsweise ein zahlenmittleres Molekulargewicht von 480 bis 3000 g/mol, vorzugsweise 1000 bis 3000 g/mol.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 8 reaktive Wasserstoffatome gebunden enthält, oder durch kationische Polymerisation mit Lewis-Säuren, wie Antimonpentachlorid oder Borfluorid-Etherat oder durch Basen wie z.B. Kaliumhydroxid aus einem oder mehreren Alkylenoxiden mit 2 bis 4 Kohlenstoffatomen im Alkylenrest. Geeignete Alkylenoxide sind beispielsweise, 1,3-Propylenoxid, 1,2- bzw. 2,3-Butylenoxid und vorzugsweise Ethylenoxid und 1,2-Propylenoxid. Des Weiteren kann Tetrahydrofuran Monomer eingesetzt werden. Weiter können als Katalysatoren auch Multimetallcyanidverbindungen, so genannte DMC-Katalysatoren, eingesetzt werden. Die Alkylenoxide können einzeln, alternierend nacheinander oder als Mischungen verwendet werden. Bevorzugt werden 1,2-Propylenoxid, Ethylenoxid und Mischungen aus 1,2-Propylenoxid und Ethylenoxid, wobei das Ethylenoxid in Mengen von 1 bis 50 % eingesetzt wird und weiter bevorzugt als Ethylenoxid-Endblock eingesetzt wird ("EO-cap"), so dass die entstehenden Polyole zu über 70 % primäre OH-Endgruppen aufweisen. In einer besonders bevorzugten Ausführungsform werden Mischungen von Startermolekülen verwendetet, so dass die mittlere Anzahl an reaktiven Wasserstoffatome der Startermoleküle zwischen 2 bis 6 liegt. Als Startermolekül kommen vorzugsweise Wasser oder 2- bis 8-wertige Alkohole, wie Ethylenglykol, 1,2- und 1,3-Propandiol, Diethylenglykol, Dipropylenglykol, 1,4-Butandiol, Glycerin oder Trimethylolpropan, Pentaerythrit, Zuckeralkohole wie Sorbitol oder Zucker wie Saacherose, aminische Verbindungen wie z.B. Ethylendiamin, Diethanolamin oder Toluoldiamin oder Mischungen der Startermoleküle in Betracht.

Die besonders bevorzugten Polyetherpolyole, vorzugsweise Polyoxypropylen-polyoxyethylenpolyole oder Polyoxypropylen-polyole, besitzen vorzugsweise eine Funktionalität von 1,5 bis 5,8, bevorzugt eine Funktionalität von 1,7 bis 5 und ganz besonders bevorzugt eine Funktionalität von 1,85 bis 4,5 und zahlenmittlere Molekulargewichte von 1.000 g/mol bis 12.000 g/mol (bzw. eine OH-Zahl von 7 bis 325 mg KOH/g), vorzugsweise von 1.500 g/mol bis 8.000 g/mol (bzw. eine OH-Zahl von 12 bis 190 mg KOH/g), insbesondere von 2.000 g/mol bis 6.000 g/mol (bzw. eine OH-Zahl von 17 bis 125 mg/KOH).

Erfindungsgemäß werden Polyesterpolyole (Polyesterole) oder Polyetherpolyole (Polyetherole) als Polyole als Verbindung (ii.1) eingesetzt. Ebenso könnten Polycarbonate, hydroxyl-terminierte Polyole auf Polybutadien-Basis und Fettäure basierte Polyole eingesetzt werden.

In einer bevorzugten Ausführungsform des Polyurethangießelastomers ist das mindestens ein Polyester- oder Polyetherpolyol gemäß (ii.1) ausgewählt aus der Gruppe der zweifunktionalen Polyesterpolyole und Polyetherpolyole, weiter bevorzugt aus der Gruppe bestehend aus Polyethylenglykol, Polypropylenglykol, Polyadipaten, Polycarbonat(diol)en und Polycaprolactonen, hydroxyl-terminierten Polyolen auf Polybutadien-Basis, Fettäure basierten Polyolen und

Polytetrahydrofuran (PTHF), weiter bevorzugt aus der Gruppe von Polyesterdiol, Polyoxypropylenpolyoxyethylen und PTHF. Sofern PTHF als Polyetherpolyol eingesetzt wird, weist das PTHF bevorzugt ein zahlenmittleres Molekulargewicht Mn im Bereich von 650 bis 3000 g/mol, bevorzugt im Bereich von 900 bis 2500 g/mol, weiter bevorzugt im Bereich von 1000 bis 2200 g/mol, auf.

Erfindungsgemäß wird gemäß (i) eine Polyisocyanatzusammensetzung eingesetzt. Die Polyisocyanatzusammensetzung enthält dabei mindestens ein Polyisocyanat. Erfindungsgemäß kann die Polyisocyanatzusammensetzung auch zwei oder mehr Polyisocyanate enthalten.

Als Polyisocyanate können aliphatische, cycloaliphatische, araliphatische und/oder aromatische Diisocyanate eingesetzt werden. Im Einzelnen seien beispielhaft die folgenden aromatischen Isocyanate genannt: 2,4-Toluol-diisocyanat, Gemische aus 2,4- und 2,6-Toluol-diisocyanat, 4,4'-, 2,4'- und/oder 2,2'-Diphenylmethan-diisocyanat (MDI), Gemische aus 2,4'- und 4,4'-Diphenylmethan-diisocyanat, urethan-, carbodiimid- oder uretonim-modifizierte flüssige 4,4'- und/oder 2,4-Diphenylmethan-diisocyanate, 4,4'-Diisocyanato-diphenylethan, die Mischungen aus monomeren Methandiphenyldiisocyanaten und höherkernigen Homologen des Methandiphenyldiisocyanats (Polymer-MDI), (1,2) und 1,5-Naphthylen-diisocyanat oder Prepolymere aus diesen Isocyanaten und Polyolen oder Isocyanaten und isocyanatreaktiven Komponenten verwendet werden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat oder Prepolymere dieser Isocyanate.

Bevorzugt werden erfindungsgemäß aromatische Polyisocyanate oder Prepolymere aus aromatischen Polyisocyanaten eingesetzt. Gemäß einer weiteren Ausführungsform betrifft die vorliegende Erfindung daher ein Verfahren zur Herstellung eines Polyurethans wie zuvor beschrieben, wobei das Polyisocyanat ein aromatisches Polyisocyanat ist.

Polyisocyanatprepolymere sind erhältlich, indem vorstehend beschriebene Polyisocyanate im Überschuss, beispielsweise bei Temperaturen von 30 bis 150 °C, bevorzugt bei Temperaturen von 50 bis 120 °C und ganz besonders bevorzugt bei etwa 80 °C, mit Polyolen zum Prepolymer umgesetzt werden. Vorzugsweise werden zur Herstellung der erfindungsgemäßen Prepolymere Polyisocyanate und handelsübliche Polyole auf Basis von Polyestern, beispielsweise ausgehend von Adipinsäure, oder Polyethern, beispielsweise ausgehend von Ethylenoxid und/oder Propylenoxid, verwendet.

Polyole sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole die oben beschriebenen polymeren Verbindungen mit gegenüber Isocyanate reaktiven Wasserstoffatomen eingesetzt. Besonders bevorzugt werden als Polyole Polyetherole eingesetzt.

Gegebenenfalls werden den genannten Polyolen bei der Herstellung der Isocyanatprepolymere übliche Kettenverlängerer oder Vernetzungsmittel zugegeben. Solche Substanzen sind grundsätzlich aus dem Stand der Technik bekannt. Vorzugsweise wird dabei das Verhältnis von organischen Polyisocyanaten zu Polyolen und Kettenverlängerern so gewählt, dass das Isocyanatprepolymer einen NCO-Gehalt von 2 bis 33,5 %, bevorzugt 10 bis 32 %, weiter bevorzugt von 12 bis 30 % und ganz besonders bevorzugt einen NCO-Gehalt von 15 bis 28 % aufweist. Gemäß einer besonders bevorzugten Ausführungsform der Erfindung enthält die Isocyanatkomponente oder das Isocyanatprepolymer einen Anteil von carbodiimid-modifizierten 4,4'-MDI von mindestens 2,5 Gew.-%, bevorzugt von mindestens 7,5 Gew.-% und ganz besonders bevorzugt von mindestens 12,5 Gew.-% und kleiner 30 Gew.-%. Dabei wird der Anteil von carbodiimid-modifizierten 4,4'-MDI bezogen auf das eingesetzte Isocyanat in der Isocyanatkomponente oder im Isocyanatprepolymeren.

Erfindungsgemäß kann das Polyisocyanat in reiner Form oder in Form einer Zusammensetzung z.B. einem Isocyanatprepolymer verwendet werden. In einer weiteren Ausführungsform kann eine Mischung enthaltend Polyisocyanat und mindestens ein Lösungsmittel eingesetzt werden. Geeignete Lösungsmittel sind dem Fachmann bekannt.

In einer bevorzugten Ausführungsform des Polyurethangießelastomers enthält die die Polyisocyanatzusammensetzung gemäß (i) mindestens ein Polyisocyanat ausgewählt aus den Diisocyanaten, bevorzugt ausgewählt aus der Gruppe bestehend aus 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), carbodiimid-modifiziertem 4,4'-MDI, Hexamethylen-1,6-diisocyanat (HDI) und 4,4'-, 2,4'- und 2,2'-Methylendicyclohexyldiisocyanat (H12MDI) und Mischungen aus den genannten Polyisocyanatzusammensetzungen, weiter bevorzugt 4,4'-MDI und carbodiimid-modifiziertem 4,4'-MDI, oder/und höherkernigen Homologen des Methandiphenyldiisocyanats (Polymer-MDI).

In einer bevorzugenden Ausführung der Erfindung kann der Polyisocyanatzusammensetzung (i) auch das mindestens eine zwei- oder dreifunktionale Polyester- oder Polyetherpolyol (ii.1) ganz oder anteilig und/oder das mindestens eine Polysiloxan (ii.2) ganz oder anteilig zu gesetzt werden, um ein Prepolymer herzustellen, welches dann mit weiteren Poylolzusammensetzungen (ii) und / oder Kettenverlängererzusammensetzung (iii) umgesetzt wird. Der NCO-Gehalt der Prepolymere liegt zwischen 1 bis 33,5, bevorzugt zwischen 2 und 27 und besonders bevorzugt zwischen 2 und 23.

Gemäß einer bevorzugten Ausführungsform betrifft die Erfindung daher ein Polyurethangießelastomer, wobei die Polyisocyanatzusammensetzung (i) in Form eines isocyanatterminierten Prepopylmers (ia), erhalten oder erhältlich aus der Umsetzung von Polyisocyanatzusammensetzung (i) mit gegebenenfalls dem mindestens einen zwei- oder dreifunktionalen Polyester- oder Polyetherpolyol (ii.1) bzw. gegebenenfalls einem Teil des mindestens einen zwei- oder dreifunktionalen Polyester- oder Polyetherpolyols (ii.1) und gegebenenfalls dem mindestens einen Polysiloxans (ii.2) bzw. gegebenenfalls einem Teil des mindestens einen Polysiloxans (ii.2), und das Polyurethangießelastomer erhalten oder erhältlich ist durch Umsetzung von mindestens den Komponenten

(ia) isocyanatterminiertes Prepolymer;
(ii.1) gegebenenfalls mindestens ein zwei- oder dreifunktionale Polyester- oder Polyetherpolyol bzw. gegebenenfalls verbliebener Teil des mindestens einen zwei- oder dreifunktionalen Polyester- oder Polyetherpolyols (ii.1),
(ii.2) gegebenenfalls mindestens ein Polysiloxan (ii.2) bzw. gegebenenfalls verbliebener Teil des mindestens einen Polysiloxans;
(iii) Kettenverlängerer.

Gemäß einer besonders bevorzugten Ausführungsform betrifft die Erfindung ein Polyurethangießelastomer, wobei die Polyisocyanatzusammensetzung (i) in Form eines isocyanatterminierten Prepopylmers (ia), erhalten oder erhältlich aus der Umsetzung von Polyisocyanatzusammensetzung (i) mit dem mindestens einen zwei- oder dreifunktionalen Polyester- oder Polyetherpolyol (ii.1) und dem mindestens einen Polysiloxan (ii.2), und das Polyurethangießelastomer erhalten oder erhältlich ist durch Umsetzung von mindestens den Komponenten

(ia) isocyanatterminiertes Prepolymer;
(iii) Kettenverlängerer.

Gemäß einer besonders bevorzugten Ausführungsform betrifft die Erfindung ein Polyurethangießelastomer, wobei die Polyisocyanatzusammensetzung (i) in Form eines isocyanatterminierten Prepopylmers (ia), erhalten oder erhältlich aus der Umsetzung von Polyisocyanatzusammensetzung (i) mit dem mindestens ein Polysiloxan (ii.2), und das Polyurethangießelastomer erhalten oder erhältlich ist durch Umsetzung von mindestens den Komponenten

(ia) isocyanatterminiertes Prepolymer;
(ii.1) mindestens ein zwei- oder dreifunktionales Polyester- oder Polyetherpolyol (ii.1),
(iii) Kettenverlängerer.

Gemäß einer weiteren besonders bevorzugten Ausführungsform betrifft die Erfindung ein Polyurethangießelastomer, wobei die Polyisocyanatzusammensetzung (i) in Form eines isocyanatterminierten Prepopylmers (ia), erhalten oder erhältlich aus der Umsetzung von Polyisocyanatzusammensetzung (i) mit einem Teil des mindestens einen zwei- oder dreifunktionalen Polyester- oder Polyetherpolyols (ii.1) bzw einem Teil des mindestens einen Polysiloxans (ii.2), und das Polyurethangießelastomer erhalten oder erhältlich ist durch Umsetzung von mindestens den Komponenten

(ia) isocyanatterminiertes Prepolymer;
(ii.1) gegebenenfalls dem mindestens einen zwei- oder dreifunktionalen Polyester- oder Polyetherpolyol bzw. gegebenenfalls verbliebener Teil des mindestens einen zwei- oder dreifunktionalen Polyester- oder Polyetherpolyols,
(ii.2) gegebenenfalls mindestens ein Polysiloxan bzw. verbliebener Teil des mindestens einen Polysiloxans (ii.2);
(iii) Kettenverlängerer.

Erfindungsgemäß werden die Komponenten (i) bis (ii) in einem Verhältnis eingesetzt, so dass das molare Verhältnis aus der Summe der Funktionalitäten der eingesetzten Polyolzusammensetzung (ii), insbesondere zwei- oder dreifunktionaler Polyester- oder Polyetherpolyol gemäß (ii.1) und Polysiloxan (ii.2), zu der Summe der Funktionalitäten der eingesetzten Polyisocyanatzusammensetzung (i) im Bereich von 0,5:1 bis 1:250 liegt. Bevorzugt liegt das Verhältnis im Bereich von 0,6:1 bis 1:350, ganz besonders bevorzugt im Bereich von 0,85:1 bis 1:13 und insbesondere zwischen 0,9:1 und 1:115.

Erfindungsgemäß wird gemäß (iii) eine Kettenverlängererzusammensetzung eingesetzt. Diese umfasst bevorzugt Kettenverlängerungsmittel und/oder Vernetzungsmittel. Diese Substanzen werden bevorzugt mit einem Molekulargewicht von vorzugsweise kleiner 450 g/mol, besonders bevorzugt von 60 bis 400 g/mol eingesetzt, wobei Kettenverlängerer zwei gegenüber Isocyanaten reaktive Wasserstoffatome und Vernetzungsmittel 3 gegenüber Isocyanat reaktive Wasserstoffatome aufweisen. Diese können bevorzugt einzeln oder in Form von Mischungen eingesetzt werden.

Dabei ist im Rahmen der vorliegenden Erfindung auch die Polyolzusammensetzung gemäß (ii) frei von derartigen Verbindungen. Erfindungsgemäß können Kettenverlängerer eingesetzt werden, die für die Herstellung von Polyurethanen bekannt sind. Mögliche, niedermolekulare Kettenverlängerer sind beispielsweise in "Kunststoffhandbuch, Band 7, Polyurethane" Carl Hanser Verlag, 3. Auflage, 1993, Kapitel 3.2 und 3.3.2 genannt. Bevorzugt umfasst die Kettenverlängerungszusammensetzung gemäß (iii) mindestens eine Verbindung, welche mindestens zwei gegenüber Isocyanaten reaktive funktionelle Gruppen, bevorzugt zwei gegenüber Isocyanaten reaktive funktionelle Gruppen, aufweist, wobei die gegenüber Isocyanaten reaktiven funktionellen Gruppen bevorzugt ausgewählt sind aus der Gruppe von Hydroxylgruppe, Aminogruppe und Thiolgruppe.

Vorzugsweise werden Diole und/oder Triole mit Molekulargewichten kleiner als 400 g/mol, besonders bevorzugt von 60 bis 300 g/mol und insbesondere 60 bis 150 g/mol eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Ferner können als Kettenverlängerer auch aromatische Amine wie z.B. Diethyltoluoldiamin, 3,3'-Dichloro-4,4'-diaminodiphenylmethan, 3,5-Diamino-4-chlorisobutylbenzoat, 4-Methyl-2,6-bis(methylthio)-1,3-diaminobenzol, Trimethylenglykol-di-p-aminobenzoat, 2,4-Diamino-3,5-di(methylthio)toluol verwendet werden. Solche aromatischen aminischen Kettenverlängerer sind von verschiedenen Herstellern zu beziehen und dem Fachmann meist auch unter diversen Abkürzungen wie z.B. MOCA, MBOCA, MCDEA, DETA bekannt. Besonders bevorzugt werden als Kettenverlängerer Monoethylenglycol, 1,4-Butandiol, Diethylengylcol, Glycerin, Trimethylolpropan, 2,4-Diamino-3,5-di(methylthio)toluol oder Mischungen davon eingesetzt.

Gemäß einer besonders bevorzugten Ausführungsform betrifft die Erfindung ein Polyurethangießelastomer erhältlich oder erhalten durch Umsetzung von mindestens den Komponenten (i) bis (iii):

(i) eine Diisocyanatzusammensetzung, welche mindestens 4,4'-MDI umfasst;

(ii) eine Polyolzusammensetzung, umfassend

(ii.1) mindestens PTHF,

(ii.2) mindestens ein Polysiloxan der allgemeinen Formel Ia

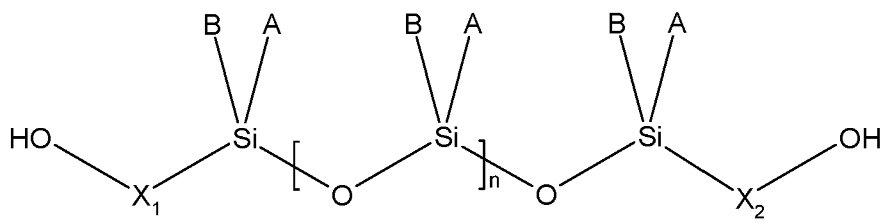

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ jeweils unabhängig eine ganze Zahl im Bereich von 3 bis 15 ist;

(iii) eine Kettenverlängererzusammensetzung, welche mindestens 1,4-Butandiol umfasst.

Gemäß einer weiteren besonders bevorzugten Ausführungsform betrifft die Erfindung ein Polyurethangießelastomer erhältlich oder erhalten durch Umsetzung von mindestens den Komponenten (i) bis (iii):

(i) eine Diisocyanatzusammensetzung, welche mindestens 4,4'-MDI umfasst;

(ii) eine Polyolzusammensetzung, umfassend

(ii.1) mindestens ein Polyesterdiol,

(ii.2) mindestens ein Polysiloxan der allgemeinen Formel Ia

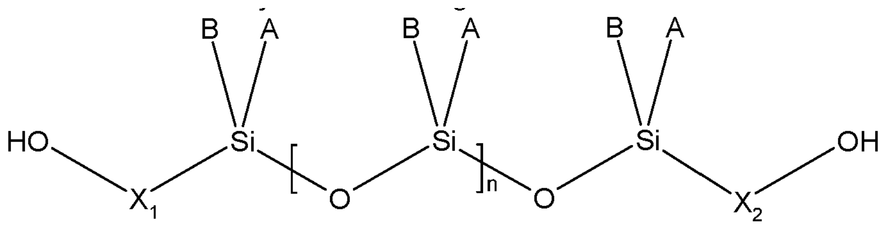

(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ jeweils unabhängig eine ganze Zahl im Bereich von 3 bis 15, bevorzugt im Bereich von 7 bis 14, ist;

(iii) eine Kettenverlängererzusammensetzung, welche mindestens 1,4-Butandiol umfasst.

Gemäß einer weiteren besonders bevorzugten Ausführungsform betrifft die Erfindung ein Polyurethangießelastomer erhältlich oder erhalten durch Umsetzung von mindestens den Komponenten (i) bis (iii):

(i) eine Diisocyanatzusammensetzung, welche mindestens 4,4'-MDI umfasst;
(ii) eine Polyolzusammensetzung, umfassend

(ii.1) mindestens PTHF, bevorzugt mindestens pTHF und Polyoxypropylenpolyoxyethylen,
(ii.2) mindestens ein Polysiloxan der allgemeinen Formel Ia

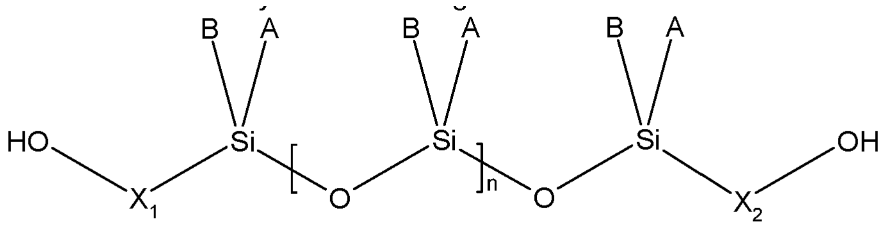

(Ia),

wobei n eine ganze Zahl im Bereich von 10 bis 30 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ jeweils unabhängig eine ganze Zahl im Bereich von 3 bis 15, bevorzugt im Bereich von 6 bis 10, ist;

(iii) eine Kettenverlängererzusammensetzung, welche mindestens 1,4-Butandiol oder 2,4-Diamino-3,5-di(methylthio)toluol umfasst.

Gemäß einer weiteren besonders bevorzugten Ausführungsform betrifft die Erfindung ein Polyurethangießelastomer erhältlich oder erhalten durch Umsetzung von mindestens den Komponenten (i) bis (iii):

(i) eine Diisocyanatzusammensetzung, welche mindestens 4,4'-MDI umfasst;
(ii) eine Polyolzusammensetzung, umfassend

(ii.1) mindestens PTHF oder Polyoxypropylenpolyoxyethylen,
(ii.2) mindestens ein Polysiloxan der allgemeinen Formel Ia

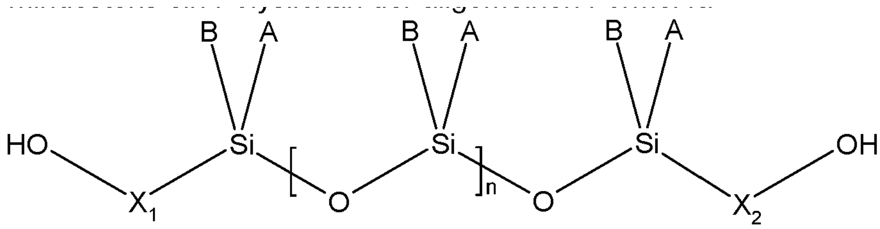

(Ia),

wobei n eine ganze Zahl im Bereich von 10 bis 30 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ jeweils unabhängig Null oder 1 ist;

(iii) eine Kettenverlängererzusammensetzung, welche mindestens 1,4-Butandiol umfasst.

Erfindungsgemäß können bei der Umsetzung der Komponenten (i) bis (iii) weitere Additive zugesetzt werden, beispielsweise Katalysatoren oder Hilfs- und Zusatzstoffe. Zusatzstoffe und Hilfsmittel sind dem Fachmann an sich bekannt. Erfindungsgemäß können auch Kombinationen aus mehreren Additiven eingesetzt werden. Geeignete Hilfs- und Zusatzstoffe können beispielsweise dem Kunststoffhandbuch, Band 7, Carl Hanser Verlag, München 1966 (S. 103-113) entnommen werden.

Im Rahmen der vorliegenden Erfindung werden unter dem Begriff "Additiv" insbesondere Vernetzungsmittel, Hilfs- und Zusatzstoffe oder Additive wie z.B. oberflächenaktive Substanzen, Farbstoffe, Pigmente, Oxidationsschutzmittel, UV-Schutzmittel, Wasserfänger, Katalysatoren, Entschäumer, Hydrolyseschutzmittel, Latentwärmespeicher, Mikroholkugeln und Füllstoffe wie z.B. Silikate und/oder Kreide verstanden.

Gemäß einer weiteren Ausführungsform betrifft die vorliegende Erfindung demgemäß ein Polyurethangießelastomer wie zuvor beschrieben, wobei das Polyurethangießelastomer mindestens ein Additiv enthält. Hierbei ist es besonders bevorzugt, wenn der Restwassergehalt der Edukte durch Zusatz von Wasserfängern reduziert wird. Als Wasserfänger sind beispielsweise Zeolithe geeignet. Die Wasserfänger werden beispielsweise in einer Menge von 0,1 bis 10 Gew.-%, bezogen auf das Gesamtgewicht der Polyolkomponente (ii) eingesetzt.

Geeignete Katalysatoren sind ebenfalls grundsätzlich aus dem Stand der Technik bekannt, siehe auch Kunststoffhandbuch, Band 7, Polyurethane", Carl Hanser Verlag, 3. Auflage, 1993, Kapitel 3.4.1. Bevorzugt werden Amine als Katalysatoren für die Reaktion von Polyol und Isocyanat verwendet. Geeignete Katalysatoren sind beispielsweise Amine ausgewählt aus der Gruppe bestehend aus tertiären Aminen, vorzugsweise ausgewählt aus der Gruppe bestehend aus Tributylamin, Tri-ethanolamin, Triisopropanolamin, N-methyl-diethanolamin, N-ethyl-diethanolamin, N,N-dimethylethanolamin, N-methyl-morpholin, N-ethyl-morpholin, N,N,N',N'-tetramethyl-ethylendiamin, Pentamethyldiethylentriamin; 1,4-Diaza-bicyclo-(2,2,2)-octan, N-methyl-N'-dimethylaminoethylpiperazin, Bis-(dimethylaminoalkyl)-piperazin, N,N-Dimethylbenzylamin, N,N-Di-methylcyclohexylamin, N,N-Diethylbenzylamin, Bis-(N,N-diethylaminoethyl)adipat, N,N,N',N'-Tetramethyl-1,3-butandiamin, N,N-Dimethyl-beta-phenylethylamin, Bis-(dimethyl-aminopropyl)harnstoff, 1,2-Dimethylimidazol, 2-Methylimidazol, monozyklischen und bizyklischen Amidinen, Bis-(dialkylamino)-alkylethern; sekundären Aminen, insbesondere Dimethylamin; und Mischungen von zwei oder mehr dieser Amine. Ebenso kommen organische Metallverbindungen in Betracht. Bevorzugt werden organische Metallverbindungen auf Basis von Zinn, Zink, Bismuth, Titan, Zirkonium, Mangan, Eisen, Kobalt, Kupfer, Aluminium verwendet. Beispielsweise seinen genannt organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat, Titanverbindungen wie beispielsweise Titan-IV-(triethanolamito)isopropxide oder Titan-IV--bis(triethanolamito)diisopropxide oder Mischungen diverser Metallverbindungen. Die organischen Metallverbindungen können allein oder in Kombination mit stark basischen Aminen eingesetzt werden.

In einer bevorzugten Ausführungsform der Erfindung liegt der Anteil an Katalysatoren in der Zusammensetzung im Bereich von 0,00001 Gew.-% bis 5 Gew.-%, bevorzugt im Bereich von 0,0001 Gew-% bis 3 Gew.-% und ganz besonders bevorzugt im Bereich von 0,0005 Gew.-% und 2 Gew.-%.

Gemäß einem weiteren Aspekt betrifft die vorliegende Erfindung auch ein Verfahren zur Herstellung eines Polyurethangießelastomers umfassend die Umsetzung der Komponenten (i) bis (ii):

(i) eine Polyisocyanatzusammensetzung;
(ii) eine Polyolzusammensetzung, umfassend

(ii.1) mindestens ein Polyester- oder Polyetherpolyol,
(ii.2) mindestens ein Polysiloxan aufweisend zwei bis fünf endständige gegenüber Isocyanaten reaktive Funktionalitäten ausgewählt aus der Gruppe bestehend aus Thiogruppe, Hydroxylgruppe und Aminogruppe.

Weiter betrifft die vorliegende Erfindung auch ein Verfahren zur Herstellung eines Polyurethangießelastomers umfassend die Umsetzung der Komponenten (i) bis (iii):

(i) eine Polyisocyanatzusammensetzung;
(ii) eine Polyolzusammensetzung, umfassend

(ii.1) mindestens ein zweifunktionales Polyester- oder Polyetherpolyol,
(ii.2) mindestens ein Polysiloxan der allgemeinen Formel I

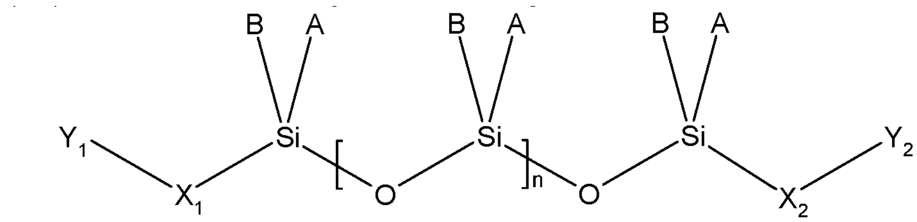
(I),

wobei n eine ganze Zahl im Bereich von 1 bis 250 ist, A und B unabhängig voneinander ausgewählt sind aus der Gruppe der C1-C20-Alkylgruppen; $X_1$ eine $(CH_2-CH_2-O)_m$-Gruppe, eine $(CH_2-CH_2-CH_2-O)_m$-Gruppe oder eine $(CHCH_3-CH_2-O)$m-Gruppe ist, $X_2$ eine $(O-CH_2-CH_2)_m$-Gruppe eine $(O-CH_2-CH_2-CH_2)_m$-Gruppe oder eine $(O-CH_2-CHCH_3)_m$-Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind;

(iii) eine Kettenverlängererzusammensetzung.

Gemäß einer weiteren bevorzugten Ausführungsform betrifft die Erfindung auch ein Verfahren zur Herstellung eines Polyurethangießelastomers umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens PTHF,
(ii.2) mindestens ein Polysiloxan der allgemeinen Formel Ia

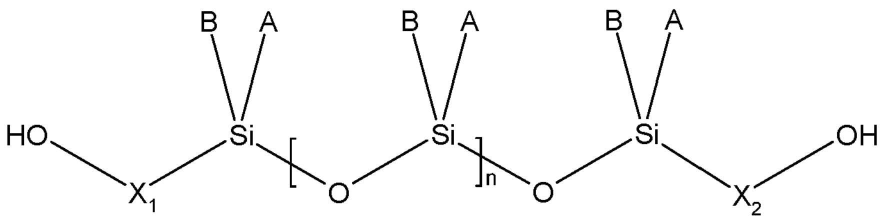
(Ia),

wobei n eine ganze Zahl im Bereich von 10 bis 20 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ jeweils unabhängig eine ganze Zahl im Bereich von 3 bis 15 ist;
(iii) eine Kettenverlängererzusammensetzung, welche mindestens 1,4-Butandiol umfasst.

Gemäß einer weiteren bevorzugten Ausführungsform betrifft die Erfindung auch ein Verfahren zur Herstellung eines Polyurethangießelastomers umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens ein Polyesterdiol,
(ii.2) mindestens ein Polysiloxan der allgemeinen Formel Ia

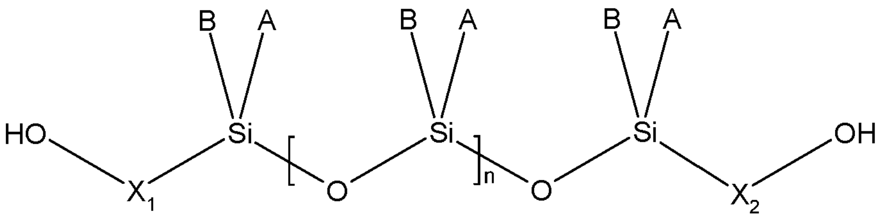

(Ia),

wobei n eine ganze Zahl im Bereich von 10 bis 20 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ jeweils unabhängig eine ganze Zahl im Bereich von 3 bis 15, bevorzugt im Bereich von 7 bis 14, ist;

(iii) eine Kettenverlängererzusammensetzung, welche mindestens 1,4-Butandiol umfasst.

Gemäß einer weiteren bevorzugten Ausführungsform betrifft die Erfindung auch ein Verfahren zur Herstellung eines Polyurethangießelastomers umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens PTHF, bevorzugt mindestens pTHF und Polyoxypropylenpolyoxyethylen,
(ii.2) mindestens ein Polysiloxan der allgemeinen Formel Ia

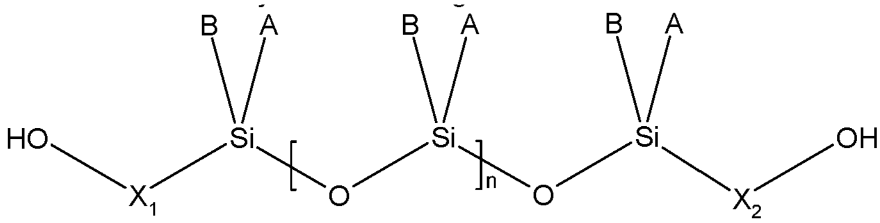

(Ia),

wobei n eine ganze Zahl im Bereich von 10 bis 30 ist, A und B beides Methylgruppen sind; $X_1$ eine $(CH_2\text{-}CH_2\text{-}O\text{-})_m$-Gruppe ist, $X_2$ eine $(O\text{-}CH_2\text{-}CH_2)_m$-Gruppen ist, wobei m für $X_1$, $X_2$ jeweils unabhängig eine ganze Zahl im Bereich von 3 bis 15, bevorzugt im Bereich von 6 bis 10, ist;

(iii) eine Kettenverlängererzusammensetzung, welche mindestens 1,4-Butandiol oder 2,4-Diamino-3,5-di(methylthio)toluol umfasst.

Gemäß einer weiteren bevorzugten Ausführungsform betrifft die Erfindung auch ein Verfahren zur Herstellung eines Polyurethangießelastomers umfassend die Umsetzung der Komponenten (i) bis (iii):

(i) eine Diisocyanatzusammensetzung, welche mindestens 4,4'-MDI umfasst;
(ii) eine Polyolzusammensetzung, umfassend

(ii.1) mindestens PTHF oder Polyoxypropylenpolyoxyethylen,
(ii.2) mindestens ein Polysiloxan der allgemeinen Formel Ia

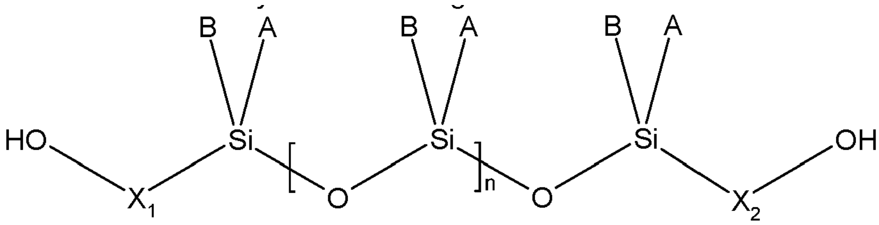

(Ia),

wobei n eine ganze Zahl im Bereich von 10 bis 30 ist, A und B beides Methylgruppen sind; $X_1$ eine $(CH_2-CH_2-O-)_m$-Gruppe ist, $X_2$ eine $(O-CH_2-CH_2)_m$-Gruppen ist, wobei m für $X_1$, $X_2$ jeweils unabhängig Null oder 1 ist;

(iii) eine Kettenverlängererzusammensetzung, welche mindestens 1,4-Butandiol umfasst.

Gemäß einer weiteren bevorzugten Ausführungsform betrifft die Erfindung auch ein Verfahren zur Herstellung eines Polyurethangießelastomers umfassend

(a) Umsetzen der Polyisocyanatzusammensetzung (i) mit gegebenenfalls dem mindestens einen zwei-oder dreifunktionalen Polyester- oder Polyetherpolyol (ii.1) bzw. gegebenenfalls einem Teil des mindestens einen zwei-oder dreifunktionalen Polyester- oder Polyetherpolyols (ii.1) und gegebenenfalls dem mindestens einen Polysiloxan (ii.2) bzw. einem Teil des mindestens einen Polysiloxans (ii.2) zu einem isocyanatterminierten Prepolymer (ia);
(b) Umsetzen des in (a) erhaltenen isocyanatterminierten Prepolymers mit gegebenenfalls dem mindestens einem zwei- oder dreifunktionalen Polyester- oder Polyetherpolyol (ii.1) bzw. gegebenenfalls verbliebenem Teil des mindestens einen zwei- oder dreifunktionalen Polyester- oder Polyetherpolyols (ii.1), gegebenenfalls dem mindestens ein Polysiloxan (ii.2) bzw. dem gegebenenfalls verbliebenen Teil des mindestens einen Polysiloxans und dem Kettenverlängerer (iii).

Gemäß einer besonders bevorzugten Ausführungsform betrifft die Erfindung auch ein Verfahren zur Herstellung eines Polyurethangießelastomers umfassend

(a) Umsetzen der Polyisocyanatzusammensetzung (i) mit dem mindestens einen zwei- oder dreifunktionalen Polyester- oder Polyetherpolyol (ii.1) und dem mindestens einen Polysiloxan (ii.2) zu einem isocyanatterminierten Prepolymer (ia);
(b) Umsetzen des in (a) erhaltenen isocyanatterminierten Prepolymers mit dem Kettenverlängerer (iii).

Gemäß einer weiteren besonders bevorzugten Ausführungsform betrifft die Erfindung auch ein Verfahren zur Herstellung eines Polyurethangießelastomers umfassend

(a) Umsetzen der Polyisocyanatzusammensetzung (i) mit dem mindstens einen Polysiloxan (ii.2) zu einem isocyanatterminierten Prepolymer (ia);
(b) Umsetzen des in (a) erhaltenen isocyanatterminierten Prepolymers mit dem mindestens einen zwei- oder dreifunktionalen Polyester- oder Polyetherpolyol (ii.1) und dem Kettenverlängerer (iii).

Gemäß einer weiteren besonders bevorzugten Ausführungsform betrifft die Erfindung auch ein Verfahren zur Herstellung eines Polyurethangießelastomers umfassend

(a) Umsetzen der Polyisocyanatzusammensetzung (i) mit einem Teil des mindestens einen zwei- oder dreifunktionalen Polyester- oder Polyetherpolyols (ii.1) bzw. einem Teil des mindestens einen Polysiloxans (ii.2) zu einem isocyanatterminierten Prepolymer (ia),
(b) Umsetzen des in (a) erhaltenen isocyanatterminierten Prepolymers mit gegebenenfalls dem mindestens ein zwei- oder dreifunktionalen Polyester- oder Polyetherpolyol (ii.1) bzw. dem gegebenenfalls verbliebenen Teil des mindestens einen zwei- oder dreifunktionalen Polyester- oder Polyetherpolyols (ii.1), gegebenenfalls dem mindestens einen Polysiloxan (ii.2) bzw. dem gegebenenfalls verbliebenen Teil des mindestens einen Polysiloxans (ii.2) und dem Kettenverlängerer (iii).

Gegenstand der Erfindung ist weiterhin die Verwendung eines Polyurethangießelastomers wie zuvor beschrieben bzw. eines Polyurethangießelastomers erhältlich oder erhalten nach den zuvor beschriebenen Verfahren zur Herstellung eines Formkörpers. Gegenstand der Erfindung ist ebenso die Verwendung eines Polyurethangießelastomers wie zuvor beschrieben bzw. eines Polyurethangießelastomers erhältlich oder erhalten nach den zuvor beschriebenen Verfahren zur Herstellung eines formgebenden Körpers.

Die Eigenschaften der erfindungsgemäßen Polyurethangießelastomere machen sie geeignet für Anwendungen in diversen Bereichen.

Gemäß einer bevorzugten Ausführungsform werden sie für einen Formkörper und/oder formgebender Körper verwendet, welcher bevorzugt ausgewählt ist aus der Gruppe bestehend aus industriellen Anwendungen, bevorzugt ausgewählt aus der Gruppe bestehend aus Rad, Rolle, Scheibenumguss, Sieb, Filter, Dichtmasse, Dichtung, Cast-in-place-seals, Vergussmasse für elektrische Bauteile, Formgussmasse, Einleger, dämpfende Materialien, Abformungs-Elemente, Dummy-Einleger; Konsumentenartikel, bevorzugt ausgewählt aus der Gruppe bestehend aus Bekleidungsartikeln, insbesondere Schuhaußensohlen und Schuhbestandteil, Schmuck und Schmuckbestandteil, insbesondere für ein Smartdevice oder für Überwachungselektronik, bevorzugt ausgewählt aus der Gruppe bestehend aus Armband, Armbandbestandteil, Umhängeband und Umhängebandbestandteil, Körpergurt und Körpergurtbestandteil, Brille und Brillenbestandteil, Materialien für dekorative Zwecke, wie Schnüre, Flaschenverschluss; Sportzubehörartikel, insbesondere Sportband, Dehnungsband; Dämpfungsmaterial; Reinigungsartikeln für mobile Fahr- oder Fluggeräte, insbesondere Scheibenwischer, Automobilzubehörteil, insbesondere Automobilkabelummantelung oder-schlauch, Schutzhülle; medizinischer Artikel, insbesondere Filter und Vergussmassen. Besonders bevorzugt werden die erfindungsgemäßen Polyurethane für die Herstellung von formgebenenden Körper eingesetzt, wie beispielsweise für den Formenbau für industrielle Anwendungen.

Die Erfindung betrifft weiterhin einen Formkörper, umfassend ein Polyurethangießelastomer wie zuvor beschrieben oder umfassend ein Polyurethangießelastomer erhältlich oder erhalten nach dem zuvor beschriebenen Verfahren. Die Erfindung betrifft ebenso einen formgebenden Körper, umfassend ein Polyurethangießelastomer wie zuvor beschrieben oder umfassend ein Polyurethangießelastomer erhältlich oder erhalten nach dem zuvor beschriebenen Verfahren.

Ein weiterer Aspekt des erfindungsgemäßen Polyurethangießelatomers betrifft umgossene Formkörper. Moderne Autoscheiben, Sonnendächer etc. werden in der Regel mit einer Dichtmasse umgossen. Polyurethan (PU) ist eines der Materialien der Wahl für diese Anwendung. Klassisch wurden die Scheiben mittels RIM-Technologie in einem geschlossenen Werkzeug umgossen. Der Trend bewegt sich nun mehr hin zu einem Umgießen im offenen Werkzeug, dem WST (Window Spray Technology) Verfahren, wie in der EP 1577080 B1 offenbart. Die WST Technologie wurde am Markt zur WST+ Technologie weiterentwickelt, wie in der EP 2799201 A1 offenbart. Kern der WST+ Technologie ist, dass das PU-Material unter ein elastisches Material (vorzugsweise Silikon wegen selbsttrennender Eigenschaften) in eine Form gegossen wird, wobei das elastische Material als formgebendes Element fungiert. Nachteile der Silikone sind jedoch deren schlechte mechanische Eigenschaften, sodass die Materialien recht schnell ermüden/zerstört werden.

Überraschenderweise wurde gefunden, dass die erfindungsgemäßen Si-PU-Gießelastomere Polyurethane ähnliche Trenneigenschaften wie Silikone besitzen, jedoch ein deutlich höheres mechanisches Niveau aufweisen. Die erfindungsgemäßen Materialien können daher als Alternativen in der WST+ Technologie als elastisches Material, d.h. als formgebendes Element, genutzt werden.

Die Erfindung betrifft daher auch die Verwendung eines Polyurethangießelastomers wie oben dargelegt oder eines Polyurethangießelastomers erhältlich oder erhalten nach einem Verfahren wie oben dargelegt zur Herstellung eines umgossenen Formkörpers, insbesondere als formgebender Körper in der Herstellung eines umgossenen Formkörpers. Die Erfindung betrifft daher auch die Verwendung eines Polyurethangießelastomers erhältlich oder erhalten durch Umsetzung von mindestens den Komponenten (i) bis (ii):

(i) ein Polyisocyanatzusammensetzung;
(ii) eine Polyolzusammensetzung, umfassend ii.1) mindestens ein zweifunktionales Polyester- oder Polyetherpolyol, (ii.2) mindestens ein Polysiloxan der allgemeinen Formel I

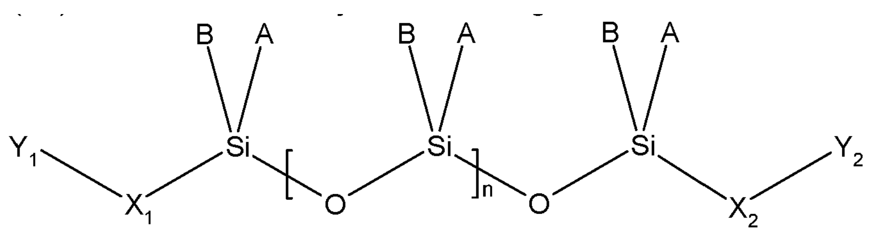

(I),

wobei n eine ganze Zahl im Bereich von 1 bis 250 ist, A und B unabhängig voneinander ausgewählt sind aus der Gruppe der C1-C20-Alkylgruppen; $X_1$ eine $(CH_2\text{-}CH_2\text{-}O)_m$-Gruppe, eine $(CH_2\text{-}CH_2\text{-}CH_2\text{-}O)_m$-Gruppe oder eine $(CHCH_3\text{-}CH_2\text{-}O)$m-Gruppe ist, $X_2$ eine $(O\text{-}CH_2\text{-}CH_2)_m$-Gruppe eine $(O\text{-}CH_2\text{-}CH_2\text{-}CH_2)_m$-Gruppe oder eine $(O\text{-}CH_2\text{-}CHCH_3)_m$-Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind;
(iii) eine Kettenverlängererzusammensetzung;

zur Herstellung eines umgossenen Formkörpers, insbesondere als formgebender Körper in der Herstellung eines umgossenen Formkörpers.

Bevorzugte und besonders bevorzugte Ausführungsformen des Polyurethangießelastomers und des Verfahrens zu seiner Herstellung, einschließlich der Synthese über Prepolymere sind eingangs bereits beschrieben.

Überraschenderweise wurde gefunden, dass sich die erfindungsgemäßen Polyurethangießelastomere (Si-PU-Gießelastomere) als formgebendes Element eignen. In einer bevorzugten Ausführungsform ist dabei das Polyurethangießelastomer so gewählt, dass wenig Haftung zwischen dem Polyurethangießelastomer und dem Substrat auftritt, wobei "Substrat" einen, beispielsweise mit einer Dichtung zu versehenden, weiteren Formkörper meint.

Hierbei ist hinsichtlich der erfindungsgemäßen Polyurethangießelastomere vorteilhaft, dass der Faktor $F_{OFE}$, der sich aus dem Verhältnis der Oberflächenenergie (OFE) der gereinigten Seite ($OFE_{ger}$) zu der OFE einer Schnittfläche der erfindungsgemäßen Polyurethangießelastomere ($OFE_{Bulk}$) ergibt, ≤ 0,85 ist, bevorzugt im Bereich zwischen 0,01 bis 0,85, weiter bevorzugt im Bereich von 0,04 bis 0,84, weiter bevorzugt im Bereich von 0,05 bis 0,8, liegt ($F_{OFE}$=$OFE_{ger}$/$OFE_{Bulk}$).

Unter der "gereinigten Seite" eines Polyurethangießelastomers ist eine Oberfläche eines Polyurethangießelastomers zu verstehen, welche mit einem organischen Lösungsmittel behandelt wurde, um Verunreinigungen auf der Oberfläche, welche beispielsweise durch Trennmittel oder durch Berührung mit menschlicher Haut verursacht wurden, zu entfernen. Das organische Lösungsmittel ist bevorzugt halogenfrei, weiter bevorzugt ausgewählt aus der Gruppe bestehend aus cyclischen, geradkettigen oder verzweigten C5-bis C10-Alkanen, geradkettigen oder verzweigten C2- bis C10-Alkanolen und geradkettigen oder verzweigten C2- bis C10-Alkanonen, weiter bevorzugt ausgewählt aus der Gruppe bestehend aus Hexan, Cyclohexan, Ethanol, Isopropanol und Aceton, weiter bevorzugt ausgewählt aus der Gruppe bestehend aus Cyclohexan, Ethanol, Isopropanol und Aceton. Unter der "Schnittfläche" eines Polyurethangießelastomers ist eine Fläche zu verstehen, welche mittels eines beliebigen Schnitts durch den Körper des Polyurethangießelastomers (des Bulkmaterials) erzeugt wurde.

Die Herstellung des umgossenen Formkörpers unter Verwendung des erfindungsgemäßen Polyurethangießelastomers erfolgt wie in der EP 1577080 B1 sowie der EP 2799201 A1 offenbart.

Die Erfindung betrifft daher in einer bevorzugten Ausführungsform ein Verfahren zur Herstellung eines umgossenen Formkörpers, umfassend

a) Bereitstellen mindestens eines formgebenden Körpers, umfassend ein Polyurethangießeleastomer wie oben beschrieben und eines mit einer Dichtung zu versehenden Substrats;
b) Anordnen des formgebenden Elements gemäß a) und des mit einer Dichtung zu versehenden Substrats gemäß a) derart, dass zwischen formgebendem Körper und Substrat ein Hohlraum gebildet wird;
c) Einbringen einer Polyurethanzusammensetzung, welche eine dynamische Viskosität, die bei einer Scherrate von 1/s gemessen wird, von weniger als 35.000 mPa.s, bevorzugt von weniger als 10.000 mPa.s, weiter bevorzugt von weniger als 5.000 mPa.s, aufweist, in den Hohlraum und Aushärten der Polyurethanzusammensetzung im Hohlraum zur Ausformung einer Dichtung am Substrat;
d) optional Entfernen des formgebenden Körpers.

Die nachfolgenden Beispiele dienen der Veranschaulichung der Erfindung, sind aber in keiner Weise einschränkend hinsichtlich des Gegenstands der vorliegenden Erfindung.

## BEISPIELE

### 1. Chemikalien

| | |
|---|---|
| Polyol 1: | Polytetramethylenetherglykol (PTHF) mit einer Hydroxylzahl von 56 mg KOH/g |
| Polyol 2: | Glycerin gestartetes Polyoxypropylenpolyoxyethylen mit einem Polyoxyethylenanteil, bezogen auf den Gehalt an Alkylenoxyd, von 28 Gew.-%, einer Hydroxylzahl von 35 mg KOH/g und und überwiegend primären Hydroxylgruppen |
| Polyol 3: | Polyesterdiol mit einer Hydroxylzahl 55 mg KOH/g aufgebaut aus Adipinsäure, Ethylenglykol und 1,4-Butandiol |
| Si-Polyol 1: | difunktionelles Polyol mit 59 Gewichts-% PDMS und 41 Gewichts-% EO Anteil und mit einer OH-Zahl von 62 mg KOH/g |

(fortgesetzt)

| | |
|---|---|
| Si-Polyol 2: | difunktionelles Polyol mit 55 Gewichts-% PDMS und 45 Gewichts-% EO Anteil und mit einer OH-Zahl von 57 mg KOH/g |
| Si-Polyol 3: | difunktionelles Polyol mit 72 Gewichts-% PDMS und 28 Gewichts-% EO Anteil und mit einer OH-Zahl von 65 mg KOH/g |
| Si-Polyol 4: | difunktionelles Polyol mit mind. 98 Gewichts-% PDMS Anteil und mit einer OH-Zahl von 45 mg KOH/g |
| Si-Polyol 5: | difunktionelles Polyol mit mind. 98 Gewichts-% PDMS Anteil und mit einer OH-Zahl von 115 mg KOH/g |
| Si-Polyol 6: | dreifunktionelles Polyol mit mind. 98 Gewichts-% PDMS Anteil und mit einer OH-Zahl von 49 mg KOH/g |
| Si-Öl 1 | lineares Polydimethylsiloxan mit einer Viskosität von 20 $mm^2/s$ bei Raumtemperatur |
| ES: | Entschäumer (Antischaummittel AF 9000 |
| ZP: | Zeolithpaste 50%ig in Polyol mit einer OH-Zahl von 80 mg KOH/g als Wasserfänger |
| KV 1: | 1,4-Butandiol |
| KV 2: | 2,4-Diamino-3,5-di(methylthio)toluol |
| Kat 1: | 1,4-Diazabicyclo-(2,2,2)-octan |
| Kat 2: | Metall katalysator Dimethylzinndineodecanoat) |
| Kat 3: | Organobismuth-Verbindung Coscat® 83 der Firma Vertellus Corp. |
| Iso 1: | 85,7 Gew.-Teile 4,4'-MDI, 1,2 Gew.-Teile 2,4' MDI, 4,9 Gew. Teile eines Propylenglycol gestarteten Polyoxypropylens mit einem Polyoxypropylen-Gehalt von 83 Gew.-% und einer Hydroxylzahl von 248 mg KOH/g und 8,2 Gew.-Teile Dipropylenenglycol wurden zum Isocyanatprepolymer umgesetzt. Der NCO-Gehalt betrug 23%. |
| Iso 2: | 53,2 Gew.-Teile 4,4'-MDI, 0,8 Gew.-Teile 2,4' MDI, 6 Gew.-Teile ISO 4 und 40 Gew.-Teile Poly 1 wurden zum Isocyanatprepolymer umgesetzt. Der NCO-Gehalt betrug 18%. |
| Iso 3: | Gemisch aus 98,6 Gew.-Teilen 4,4'-MDI und 1,4 Gew.-Teilen 2,4' MDI mit einem NCO-Gehalt von 33,5% |
| Iso 4: | Carbodiimidmodifiziertes 4,4'-MDI mit einem NCO-Gehalt von 29,5% |
| System 1: | Elastolit R 8929/110/WST, ein Polyurethansystem zur Herstellung elastischer Formteile der Firma BASF Polyurethanes GmbH |

**2. Meßmethoden**

| | |
|---|---|
| Glasübergangstemperatur: | DIN ISO 6721 |
| Weiterreißfestigkeit: | DIN ISO 34-1 Bb |
| Reißdehnung: | DIN 53504 |
| Shore-Härte: | DIN ISO 7619-1 |
| Abriebsbestimmung: | DIN ISO 4649 |
| Heißluftbeständigkeit: | DIN 53508 |
| Viskositätsmessung: | DIN 53019 (bei einer Scherrate von 1/s) |

Bestimmung von Oberflächenenergien:

Die Oberflächenenergien der Gießelastomere, sowie des Systems 1 zur Herstellung elastischer Formteile wurden mit dem Owens-Wendt-Rabel-Kaelble-Verfahren in Anlehnung an Norm DIN 55660-2 bestimmt. Die Messungen wurden mit einem Kontaktwinkelgerät DSA10 der Firma Krüss unter Verwendung von drei Testflüssigkeiten (Wasser, 1,2-Ethandiol und 1-Brom-Naphthalin) durchgeführt und aus den gemessenen Kontaktwinkel die polaren und dispersen Anteile der Oberflächenenergien berechnet. Dazu wurde die Oberfläche der Proben einmal ohne Vorbehandlung vermessen, einmal mit Cyclohexan gereinigt und einmal wurde der Probekörper (das Bulkmaterial) geschnitten und die Oberflächenenergie für die Schnittfläche des Bulkmaterials gemessen. Der Faktor ($F_{OFE}$) wurde aus OFE der gereinigten Seite ($OFE_{ger}$) zu der OFE des Bulkmaterials ($OFE_{Bulk}$) mit folgender Formel bestimmt:

$$F_{OFE}=OFE_{ger} / OFE_{Bulk}$$

**3. Referenzbeispiel 1 - Herstellung von Si-basierten Polyurethankaltgießelastomeren**

Die Bestandteile der Polyolkomponente (Polyole und Si-Polyole), Kettenverlängerer, Zeolithpaste, Entschäumer, Katalysator wurden zunächst mittels eines Speedmixer™ der Firma Haunschild für 120 Sekunden bei 1600 RPM gemischt und im Vakuum entgast. Der Mischung wurde dann die entsprechende Menge an entgaster Isocyanatkomponente zugesetzt und für 60 Sekunden bei 1600 RPM im Speedmixer™ gemischt. Die reaktive Mischung wurde dann in eine auf 90°C beheizte Form gegeben, um Prüfplatten mit einer Dicke von 2, 6 und 10 mm herzustellen. Nach 60 Minuten bei 90°C wurden die Prüfplatten entformt und 24 h bei 90°C im Heizschrank (Memmert UF160 Plus) getempert. Aus diesen Prüfplatten wurden Zugprüfstäbe ausgestanzt und die Weiterreißfestigkeit und die Reißdehnung bestimmt, sowie die Shore-Härte gemessen und der Abrieb bestimmt.

**4. Referenzbeispiel 2 - Herstellung von Si-basierten Polyurethanheißgießelastomeren**

Die Isocyanatkomponente, in diesem Fall ein Prepolymer, wurde auf 80°C im Heizschrank (Memmert UF160 Plus) erwärmt, dann zunächst mittels eines Speedmixer™ der Firma Haunschild für 10 Minuten bei 1800 RPM im Vakuum entgast und im Heizschrank erneut auf 80°C erwärmt. Anschließend wurde die entsprechende Menge an Kettenverlängerer, aufgewärmt auf 45°C im Heizschrank, zur entgasten Isocyanatkomponente gegeben und für 20 Sekunden bei 1600 RPM im Speedmixer™ gemischt. Die reaktive Mischung wurde dann in eine auf 115°C beheizte Form gegeben, um Prüfplatten mit einer Dicke von 2, 6 und 10 mm herzustellen. Nach 40 Minuten bei 115°C wurden die Prüfplatten entformt und 16 h bei 115°C im Heizschrank (Memmert UF160 Plus) getempert. Aus diesen Prüfplatten wurden Zugprüfstäbe ausgestanzt und die Weiterreißfestigkeit und die Reißdehnung bestimmt, sowie die Shore-Härte gemessen und die Glasübergangstemperatur bestimmt.

**5. Referenzbeispiel 3 - Herstellung von Prepolymeren auf Silikon-Polyol Basis**

Für die Herstellung eines 1800g-Ansatzes, wurden Iso 3 und gegebenenfalls Iso 4 in einem Vierhalskolben vorgelegt und auf 60°C erhitzt. Bei Erreichend der Temperatur wurde das die Polyolkomponente zur Isocyanat-Mischung gegeben, wobei ein Temperaturanstieg von ungefähr 5°C zu beobachten war. Bei der Herstellung der Prepolymere 6-7, wurde zuerst das Si-Polyol 1 vorgelegt, anschließend Polyol 1 dazu gegeben. Die Mischung wurde auf 80°C erhitzt und 2 Stunden unter Rückfluss gekocht. Bei der Herstellung von Prepolymeren ist sicherzustellen, dass die Azidität der Mischung durch Zugabe dem Fachmann bekannter Additive gegeben ist, um mögliche Nebenreaktionen katalysiert durch alkalisches Milieu zu verhindern.

Die hergestellten Prepolymere Pre 1-3 hatten einen NCO-Gehalt von ca. 18%, Pre 4-5 von ca. 2% und Pre 6-7 von ca. 9%. Beim Abfüllen waren die Prepolymere 1-5 transparent, die Prepolymere 6-7 weißlich trüb. Alle Proben wurden bei Raumtemperatur gelagert. Nach dem Abkühlen blieben die Prepolymere 1-5 transparent. Tabelle 1 gibt die Zusammensetzungen der Prepolymer-Formulierungen wieder. Bei Verwendung von Prepolymeren in der Synthese der Gießelastomere wurden diese anstelle der Isocyanatkomponente in der Vorschrift gemäß Referenzbeispiel 1 oder 2 eingesetzt.

Tabelle 1: Zusammensetzung der Prepolymer(Pre)-Formulierungen

| | | Pre 1 | Pre 2 | Pre 3 | Pre 4 | Pre 5 | Pre 6 | Pre 7 | Pre 8 |
|---|---|---|---|---|---|---|---|---|---|
| Polyol 1 | [Gew.-%] | 0 | 0 | 0 | 0 | 0 | 65 | 48,5 | 39,8 |

(fortgesetzt)

| | | Pre 1 | Pre 2 | Pre 3 | Pre 4 | Pre 5 | Pre 6 | Pre 7 | Pre 8 |
|---|---|---|---|---|---|---|---|---|---|
| Si-Polyol 1 | [Gew.-%] | 40 | 0 | 0 | 82,6 | 0 | 0 | 16,5 | 25 |
| Si-Polyol 2 | [Gew.-%] | 0 | 40 | 0 | 0 | 0 | 0 | 0 | 0 |
| Si-Polyol 3 | [Gew.-%] | 0 | 0 | 40 | 0 | 0 | 0 | 0 | 0 |
| Si-Polyol 4 | [Gew.-%] | 0 | 0 | 0 | 0 | 85,5 | 0 | 0 | 0 |
| Iso 3 | [Gew.-%] | 55 | 55 | 55 | 17,4 | 14,5 | 35 | 35,1 | 35,2 |
| Iso 4 | [Gew.-%] | 6 | 6 | 6 | 0 | 0 | 0 | 0 | 0 |
| NCO-Gehalt | [%] | 18 | 18 | 18 | 2 | 2 | 9 | 9 | 9 |

**6. Herstellung von Gießelastomeren mit bzw. ohne Si-Polyol-Einsatz und Bestimmung der Glasübergangstemperatur, sowie der mechanischen Eigenschaften**

Gießelastomere auf Polyether- oder Polyester-Basis mit bzw. ohne Si-Polyol-Einsatz wurden gemäß den Vorschriften aus den Referenzbeispielen 1, 2 bzw. 3 erzeugt und auf ihre mechanischen Eigenschaften untersucht. Die Tabellen 2, 3 und 4 geben die Zusammensetzungen der einzelnen Gießelastomere und deren ermittelte Eigenschaften wieder.

Tabelle 2: Zusammensetzung der Formulierungen auf Polyether-Basis und die Ergebnisse der mechanischen Prüfung.

| | 1* | 2 | 3* |
|---|---|---|---|
| Polyol 1 [Gew.-%] | 91,7 | 66,7 | 0 |
| Si-Polyol 1 [Gew.-%] | 0 | 25 | 0 |
| Si-Polyol 2 [Gew.-%] | 0 | 0 | 0 |
| Si-Polyol 3 [Gew.-%] | 0 | 0 | 0 |
| KV 1 [Gew.-%] | 4,5 | 4,5 | 3 |
| ES [Gew.-%]] | 0,5 | 0,5 | 0 |
| ZP [Gew.-%] | 3 | 3 | 0 |
| Kat 1 [Gew.-%] | 0,3 | 0,3 | 0,3 |
| Iso 1 [Gew.-%] | X | X | |
| Pre 4 [Gew.-%] | | | X |
| Index | 102 | 102 | 102 |
| Glasübergangstemperatur, bestimmt aus G" [°C] | -60 | -60 | -120 |
| Shore A Härte | 70 | 70 | 50 |
| Weiterreißfestigkeit [kN/m] | 13 | 28 | n.b. |
| Reißdehnung [%] | 520 | 830 | n.b. |
| *: Vergleichsbeispiel | | | |

Fortsetzung Tabelle 2

| | 4* | 5 | 6 | 7* | 8 | 9 | 10* | 11 | 12 |
|---|---|---|---|---|---|---|---|---|---|
| Polyol 1 [Gew.-%] | 91,7 | 91,7 | 81,7 | 82,7 | 57,7 | 57,7 | 0 | 0 | 0 |
| Si-Polyol 1 [Gew.-%] | 0 | 0 | 10 | 0 | 0 | 0 | 0 | 0 | 0 |

(fortgesetzt)

| | 4* | 5 | 6 | 7* | 8 | 9 | 10* | 11 | 12 |
|---|---|---|---|---|---|---|---|---|---|
| Si-Polyol 2 [Gew.-%] | 0 | 0 | 0 | 0 | 25 | 0 | 0 | 0 | 0 |
| Si-Polyol 3 [Gew.-%] | 0 | 0 | 0 | 0 | 0 | 25 | 0 | 0 | 0 |
| KV 1 [Gew.-%] | 4,5 | 4,5 | 4,5 | 13,5 | 13,5 | 13,5 | 100 | 100 | 100 |
| ES [Gew.-%] | 0,5 | 0,5 | 0,5 | 0,5 | 0,5 | 0,5 | 0 | 0 | 0 |
| ZP [Gew.-%] | 3 | 3 | 3 | 3 | 3 | 3 | 0 | 0 | 0 |
| Kat 1 [Gew.-%] | 0,3 | 0,3 | 0,3 | 0,3 | 0,3 | 0,3 | 0 | 0 | 0 |
| Iso 2 [Gew.-%] | X | | | X | X | X | | | |
| Pre1 [Gew.-%] | | X | X | | | | | | |
| Pre 6 [Gew.-%] | | | | | | | X | | |
| Pre 7 [Gew.-%] | | | | | | | | X | |
| Pre 8 [Gew.-%] | | | | | | | | | X |
| Index | 102 | 102 | 102 | 102 | 102 | 102 | 105 | 105 | 105 |
| Glasübergangstemperatur, bestimmt aus G" [°C] | n.b. | n.b. | n.b. | n.b. | n.b. | n.b. | -55 | -70 | -70 |
| Shore A Härte | 70 | 70 | 65 | 85 | 85 | 85 | 93 | 93 | 93 |
| Weiterreißfestigkeit [kN/m] | 14 | 20 | 24 | 33 | 40 | 40 | n.b. | n.b. | n.b. |
| Reißdehnung [%] | 520 | 780 | 840 | 440 | 640 | 650 | 470 | 440 | 560 |

X: die jeweilige Komponente ist enthalten, die Gew.-% lassen sich anhand des Index bestimmen. Der "Index" oder die "Kennzahl" spiegelt das molare Verhältnis der NCO-Gruppen zu den reaktiven Wasserstoffatomen wieder. Ein Index von 100 entspricht hier einem Verhältnis von 1 : 1. Bei einem Index von größer 100 liegt ein molarer Überschuss von Isocyanaten vor, bei einem Index von kleiner 100 liegt ein Überschuss von reaktiven Wasserstoffatomen vor.
n.b.: nicht bestimmt / Messung nicht durchgeführt

Tabelle 3: Zusammensetzung der Formulierungen auf Polyester-Basis und die Ergebnisse der mechanischen Prüfung.

| | 13* | 14 | 15 | 16 | 17 | 18* | 19 |
|---|---|---|---|---|---|---|---|
| Polyol 3 | 91,7 | 86,7 | 81,7 | 66,7 | 41,7 | 91,7 | 81,7 |
| Si-Poly 1 | 0 | 0 | 0 | 0 | 0 | 0 | 10 |
| Si-Polyol 2 | 0 | 5 | 10 | 25 | 50 | 0 | 0 |
| KV1 | 4,5 | 4,5 | 4,5 | 4,5 | 4,5 | 4,5 | 4,5 |
| ES | 0,5 | 0,5 | 0,5 | 0,5 | 0,5 | 0,5 | 0,5 |
| ZP | 3,0 | 3,0 | 3,0 | 3,0 | 3,0 | 3,0 | 3,0 |
| Kat 1 | 0,3 | 0,3 | 0,3 | 0,3 | 0,3 | 0,3 | 0,3 |
| Iso 1 | X | X | X | X | X | | |
| Iso 2 | | | | | | X | |
| Pre1 | | | | | | | X |
| Index | 102 | 102 | 102 | 102 | 102 | 102 | 102 |
| Shore A Härte | 66 | 63 | 62 | 56 | n.m. | 65 | 60 |
| Weiterreißfestigkeit [kN/m] | 17 | 26 | 23 | 23 | n.m. | 17 | 29 |

(fortgesetzt)

| | 13* | 14 | 15 | 16 | 17 | 18* | 19 |
|---|---|---|---|---|---|---|---|
| Reißdehnung [%] | 590 | 610 | 620 | 760 | n.m. | 590 | 930 |
| *: Vergleichsbeispiel<br>n.m.: Messung nicht möglich, da Matetrial zu labil ist<br>X: die jeweilige Komponente ist enthalten, die Gew.-% lassen sich anhand des Index bestimmen. Der "Index" oder die "Kennzahl" spiegelt das molare Verhältnis der NCO-Gruppen zu den reaktiven Wasserstoffatomen wieder. Ein Index von 100 entspricht hier einem Verhältnis von 1 : 1. Bei einem Index von größer 100 liegt ein molarer Überschuss von Isocyanaten vor, bei einem Index von kleiner 100 liegt ein Überschuss von reaktiven Wasserstoffatomen vor. | | | | | | | |

Wie aus dem Vergleichsbeispielen 1*, 4*, 7*, 10*, 13* und 18* und den Beispielen ersichtlich ist (Zusammenschau Tabellen 2 und 3), zeigt ein normales Polyurethanelastomer gute mechanische Eigenschaften. Mit dem Einsatz von Silkon-basierten Polyolen können allerdings die Weiterreißfestigkeit und die Reißdehnung überraschenderweise signifikant verbessert werden, ohne dabei die Shore A- Härte zu beeinflussen. In bestimmten Fällen führt eine zu hohe Konzentration an silikon-basierten Polyolen zu phasenseparierten System und somit zu wenig mechanisch stabilen PU Gießelastomeren (Beispiel 14). Zudem kann überraschenderweise die Glasübergangstemperatur signifikant reduziert werden, wie aus Beispiel 11 und 12 ersichtlich ist. Vergleichsbeispiel 3*, welches zwar eine signifikant verringerte Glasübergangstemperatur aufweist, zeigt ansonsten aufgrund der Abwesenheit von Polyether- bzw. Polyesterpolyol verschlechterte mechanische Eigenschaften.

Tabelle 4: Zusammensetzung der Formulierungen auf PTHF und Polyether-Basis, die Ergebnisse der Shore-Härte und der Abriebsbestimmung.

| | 20* | 21* | 22* | 23* | 24* | 25* | 26* | 27* | 28* | 29* |
|---|---|---|---|---|---|---|---|---|---|---|
| Polyol 1 [Gew.-%] | 0 | 0 | 0 | 0 | 0 | 0 | 0 | 82,7 | 0 | 0 |
| Polyol 2 [Gew.-%] | 91,7 | 86,7 | 81,7 | 66,7 | 86,7 | 81,7 | 66,7 | 0 | 0 | 0 |
| Si-Polyol 4 [Gew.-%] | 0 | 5 | 10 | 25 | 0 | 0 | 0 | 0 | 25 | 0 |
| Si-Polyol 5 [Gew.-%] | 0 | 0 | 0 | 0 | 5 | 10 | 25 | 0 | 0 | 0 |
| Si-Polyol 6 [Gew.-%] | 0 | 0 | 0 | 0 | 0 | 0 | 0 | 0 | 0 | 25 |
| KV1 [Gew.-%] | 4,5 | 4,5 | 4,5 | 4,5 | 4,5 | 4,5 | 4,5 | 13,5 | 13,5 | 13,5 |
| ES [Gew.-%] | 0,5 | 0,5 | 0,5 | 0,5 | 0,5 | 0,5 | 0,5 | 0,5 | 0,5 | 0,5 |
| ZP [Gew.-%] | 3 | 3 | 3 | 3 | 3 | 3 | 3 | 3 | 3 | 3 |
| Kat 1 [Gew.-%] | 0,3 | 0,3 | 0,3 | 0,3 | 0,3 | 0,3 | 0,3 | 0,3 | 0,3 | 0,3 |
| Iso 1 | X | X | X | X | X | X | X | | | |
| Iso 2 | | | | | | | | X | X | X |
| Index | 102 | 102 | 102 | 102 | 102 | 102 | 102 | 102 | 102 | 102 |
| Shore A Härte | 60 | 60 | 60 | 60 | 60 | 60 | 60 | 82 | 81 | 88 |
| Abrieb [$mm^2$] | 85 | 25 | 27 | 48 | 30 | 41 | 38 | 56 | 28 | 27 |
| Zugfestigkeit [MPa] | 42 | 37 | 16 | 16 | 15 | 11 | 9 | 48 | 31 | 35 |
| Weiterreisfestigkeit [kN/m] | 13 | 14 | 10 | 10 | 15 | 11 | 9 | 33 | 29 | 28 |
| *: Vergleichsbeispiel | | | | | | | | | | |

Wie aus dem Vergleichsbeispielen 20* und 27* und den weiteren Vergleichs-Beispielen ersichtlich ist, zeigt ein normales Polyurethanelastomer einen erhöhten Abrieb. Mit dem Einsatz von Silkon-basierten Polyolen, insbesondere in Mengen im Bereich von 5 bis 25 Gewichts-% in der Polyolkomponente, kann der Abrieb überraschenderweise signifikant reduziert werden. Jedoch leiden beim Einsatz von silikonbasierten Polyolen mit einem PDMS-Anteil von größer 90 Gewichts-% deutlich die anderen mechanischen Eigenschaften, wie z.B. die Zugfestigkeit. Überraschenderweise zeigte sich beim Einsatz von silikonbasierten Polyolen mit einem PDMS-Anteil von ≤ 90 Gewichts-%, dass diese deutlich

bessere mechanische Eigenschaften aufweisen, wie beispielsweise eine signifikant bessere Weiterreisfestigkeit.

### 7. Herstellung von Gießelastomeren und Bestimmung der thermischen Beständigkeit

Gießelastomere auf Polyether- oder Polyester-Basis mit bzw. ohne Si-Polyol-Einsatz wurden gemäß den Vorschriften aus Referenzbeispiel 1 erzeugt und einem Langzeit- sowie einem Kurzzeit-Heißluft-Alterungstest unterzogen und auf ihre Heißluftbeständigkeit untersucht. Hierfür wurden alle Prüfkörper für 3000 Stunden bei 165 °C in Luft gelagert (Langzeittest), anschließend wurde die Weiterreißfestigkeit und die Reißdehnung bestimmt. Identische Prüfkörper wurden für 6 Stunden bei 200 °C in Luft gelagert (Kurzzeittest), anschließend wurde die Weiterreißfestigkeit und die Reißdehnung bestimmt. Die Ergebnisse sind in Tabelle 5 wiedergegeben.

Tabelle 5: Zusammensetzung der Formulierungen auf Polyether-Basis, die Ergebnisse der Shore-Härte und der Hitzelagerung.

| | 1* | 2 | 30 |
|---|---|---|---|
| Polyol 1 [Gew.-%] | 91,7 | 66,7 | 66,9 |
| Si-Polyol 1 [Gew.-%] | 0 | 25 | 25 |
| KV 1 [Gew.-%] | 4,5 | 4,5 | 0 |
| KV2 [Gew.-%] | 0 | 0 | 10 |
| ES [Gew.-%] | 0,5 | 0,5 | 0,5 |
| ZP [Gew.-%] | 3 | 3 | 3 |
| Kat 1 [Gew.-%] | 0,3 | 0,3 | 0,3 |
| Iso 1 | X | X | X |
| Index | 102 | 102 | 102 |
| Lagerung bei 165°C für 10 Tage | | | |
| Weiterreißfestigkeit [kN/m] | n.m. | n.m. | 2 |
| Reißdehnung [%] | n.m. | n.m. | 170 |
| Lagerung bei 200°C 6 h | | | |
| Weiterreißfestigkeit [kN/m] | n.m. | n.m. | 3 |
| Reißdehnung [%] | n.m. | n.m. | 410 |
| n.m.: Messung nicht möglich, da Prüfstäbe zerflossen sind.<br>X: die jeweilige Komponente ist enthalten, die Gew.-% lassen sich anhand des Index bestimmen. Der "Index" oder die "Kennzahl" spiegelt das molare Verhältnis der NCO-Gruppen zu den reaktiven Wasserstoffatomen wieder. Ein Index von 100 entspricht hier einem Verhältnis von 1 : 1. Bei einem Index von größer 100 liegt ein molarer Überschuss von Isocyanaten vor, bei einem Index von kleiner 100 liegt ein Überschuss von reaktiven Wasserstoffatomen vor. | | | |

Überraschenderweise wurde gefunden, dass die Kombination aus KV2 und Si-Polyolen, insbesondere aus KV2 und Si-Polyol 1, zu einer verbesserten Hitzelagerungs-Beständigkeit von Gießelastomeren führt (Beispiel 30).

### 8. Bestimmung der Trenneigenschaften

Die Komponenten von System 1 wurden zusammengegeben und sofort für 8 Sekunden mit Hilfe eines Vollrathrührers bei 800 rpm vermischt. Das so erhaltene Gemisch wurde sofort auf die zu testenden Gießelastomere (siehe Tabelle 7) gegossen, sodass leicht zerfließende Raupen von einer Länge von ca. 10-15 cm und einer Breite von ca. 2-4 cm gebildet wurden. Als Oberflächen der Elastomere auf die das Reaktionsgemisch des System 1 aufgebracht wurden, wurden die Formseite sowie die Luftseite der in einer Metallform ausreagierten Elastomere, als auch die mit Isopropanol gereinigte und anschließend an der Luft für ca. 10 Minuten abgelüftete Luftseite verwendet. Nach der Aushärtung des Polyurethangemischs bei Raumtemperatur wurde dieses per Hand nach einem Tag von den Gießelastomer-Platten abgezogen und beide Oberflächen wurden per Sichtprüfung beurteilt. Die Formulierungen der eingesetzten Polyurethangießelastomere sind in Tabelle 6, die Ergebnisse der Prüfung sind in Tabelle 7 zusammengefasst.

Tabelle 6: Zusammensetzung der Formulierungen für die Herstellung eines elastischen Materials für die Bestimmung der Trenneigenschaften.

| | 31 | 32* | 33* | 34* | 35* | 36 | 37* | 38* | 39 | 40* |
|---|---|---|---|---|---|---|---|---|---|---|
| Poly 1 | | 86,7 | 81,7 | 66,7 | 0 | 0 | 0 | 0 | 0 | 0 |
| Poly 2 | 66,7 | 0 | 0 | 0 | 91,7 | 66,7 | 66,7 | 91,7 | 66,7 | 66,7 |
| Si-Polyol 1 | 25 | 0 | 0 | 0 | 0 | 25 | 0 | 0 | 25 | 0 |
| Si-Polyol 4 | 0 | 0 | 0 | 0 | 0 | 0 | 25 | 0 | 0 | 25 |
| Si-Öl 1 | 0 | 5 | 10 | 25 | 0 | 0 | 0 | 0 | 0 | 0 |
| KV1 | 4,5 | 4,5 | 4,5 | 4,5 | 4,5 | 4,5 | 4,5 | 4,5 | 4,5 | 4,5 |
| DF | 0,5 | 0,5 | 0,5 | 0,5 | 0,5 | 0,5 | 0,5 | 0,5 | 0,5 | 0,5 |
| ZP | 3 | 3 | 3 | 3 | 3 | 3 | 3 | 3 | 3 | 3 |
| Kat 1 | 0,3 | 0,3 | 0,3 | 0,3 | 0 | 0 | 0 | 0 | 0 | 0 |
| Kat 2 | 0 | 0 | 0 | 0 | 0,002 | 0,002 | 0,002 | 0 | 0 | 0 |
| Kat 3 | 0 | 0 | 0 | 0 | 0 | 0 | 0 | 0,004 | 0,004 | 0,004 |
| Iso 1 | X | | | | X | X | X | X | X | X |
| Iso 2 | | X | X | X | | | | | | |
| Index | 102 | 102 | 102 | 102 | 102 | 102 | 102 | 102 | 102 | 102 |

Tabelle 7. Ergebnisse der Haftungsprüfung und OFE-Faktor.

| Gießelastomer, hergestellt aus Beispiel | Aussehen der Oberfläche des Gießelastomers (Substrat) | Aussehen der Oberfläche des Elastomers, hergestellt aus System 1 | $F_{OFE}$ |
|---|---|---|---|
| 20* | - | + | 0,86 |
| 31 | ++ | ++ | 0,42 |
| 21* | ++ | ++ | 0,39 |
| 22* | ++ | ++ | 0,52 |
| 23* | ++ | ++ | 0,69 |
| 4* | - | + | n.b. |
| 32* | - | + | n.b. |
| 30 | - | - | n.b. |
| 34* | - | + | n.b. |
| 35* | - | - | n.b. |
| 36 | ++ | ++ | n.b. |
| 37* | ++ | ++ | n.b. |
| 38* | - | - | n.b. |
| 39 | + | ++ | n.b. |

(fortgesetzt)

| Gießelastomer, hergestellt aus Beispiel | Aussehen der Oberfläche des Gießelastomers (Substrat) | Aussehen der Oberfläche des Elastomers, hergestellt aus System 1 | $F_{OFE}$ |
|---|---|---|---|
| 40* | ++ | ++ | n.b. |
| ++ Oberfläche homogen, kein Rückstand auf dem Substrat sichtbar, leichtes Ablösen der beiden Elastomere voneinander<br>+ Oberfläche zeigt leichte Inhomogenität, sehr wenig Rückstand auf dem Substrat sichtbar, gutes Ablösen der beiden Elastomere voneinander<br>- inhomogene Oberfläche, erschwertes Ablösen der beiden Elastomere voneinander, Rückstand auf dem Substrat sichtbar<br>-- kohäsives Versagen, sehr schwieriges Ablösen der beiden Elastomere voneinander, nicht ausreagiertes System 1, deutlicher Rückstand auf dem Substrat | | | |

Überraschenderweise wurde gefunden, dass mit Si-Polyolen modifizierte Polyurethan Gießelastomere bessere Trenneigenschaften zeigen, als konventionelle Polyurethan Gießelastomere, siehe Vergleichsbeispiele 4*, 20*, 35* und 38*. Die Art des Katalysators (amin- oder metallbasierend) zeigt dabei keinen Einfluss auf die Trenneigenschaften, wie aus den Beispielen ersichtlich ist. Die Si-Polyole müssen allerdings kovalent mit der PU Matrix verbunden sein, da beispielsweise die Versuche 32, 34, hergestellt mit Si-Öl verschlechterte Trenneigenschaften zeigen.

Somit ist die Möglichkeit gegeben, gute Trenneigenschaften des Materials mit schnellen Zykluszeiten zu kombinieren und somit der Zugang zu einem neuartigen Material für die Herstellung von Formkörpern und umgossenen Formkörpern geschaffen. Gute Trenneigenschaften wurden hierbei unabhängig vom PDMS-Anteil der Si-Polyole erzielt, jedoch litten beim Einsatz von silikonbasierten Polyolen mit einem PDMS-Anteil von größer 90 Gewichts-% deutlich die mechanischen Eigenschaften, wie insbesondere die Zugfestigkeit.

**Patentansprüche**

**1.** Polyurethangießelastomer erhältlich oder erhalten durch Umsetzung von mindestens den Komponenten (i) bis (iii):

(i) eine Polyisocyanatzusammensetzung;
(ii) eine Polyolzusammensetzung, umfassend

(ii.1) mindestens ein zwei- oder dreifunktionales Polyester- oder Polyether-polyol,
(ii.2) mindestens ein Polysiloxan der allgemeinen Formel I

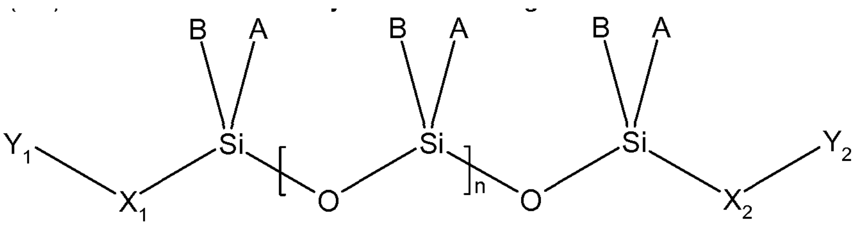

(I),

wobei n eine ganze Zahl im Bereich von 1 bis 250 ist, A und B unabhängig voneinander ausgewählt sind aus der Gruppe der C1-C20-Alkylgruppen; wobei $X_1$ eine $(CH_2\text{-}CH_2\text{-}O)_m$-Gruppe, eine $(CH_2\text{-}CH_2\text{-}CH_2\text{-}O)_m$-Gruppe oder eine $(CHCH_3\text{-}CH_2\text{-}O)_m$-Gruppe ist, $X_2$ eine $(O\text{-}CH_2\text{-}CH_2)_m$-Gruppe eine $(O\text{-}CH_2\text{-}CH_2\text{-}CH_2)_m$-Gruppe oder eine $(O\text{-}CH_2\text{-}CHCH_3)_m$-Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind;

(iii) eine Kettenverlängererzusammensetzung.

**2.** Polyurethangießelastomer gemäß Anspruch 1, wobei die Polyisocyanatzusammensetzung (i) in Form eines isocyanatterminierten Prepopylmers (ia), erhalten oder erhältlich aus der Umsetzung von Polyisocyanatzusammensetzung (i) mit gegebenenfalls dem mindestens einen Polyester- oder Polyetherpolyol (ii.1) bzw. gegebenenfalls einem

Teil des mindestens einen Polyester- oder Polyetherpolyols (ii.1) und gegebenenfalls dem mindestens einen Polysiloxans (ii.2) bzw. gegebenenfalls einem Teil des mindestens einen Polysiloxans (ii.2), und das Polyurethangießelastomer erhalten oder erhältlich ist durch Umsetzung von mindestens den Komponenten

(ia) isocyanatterminiertes Prepolymer;
(ii.1) gegebenenfalls mindestens ein Polyester- oder Polyetherpolyol bzw. gegebenenfalls verbliebener Teil des mindestens einen Polyester- oder Polyetherpolyols (ii.1),
(ii.2) gegebenenfalls mindestens ein Polysiloxan (ii.2) bzw. gegebenenfalls verbliebener Teil des mindestens einen Polysiloxans;
(iii) Kettenverlängerer.

**3.** Polyurethangießelastomer gemäß Anspruch 1 oder 2, wobei der Faktor $F_{OFE}$, der sich aus dem Verhältnis der Oberflächenenergie (OFE) der gereinigten Seite ($OFE_{ger}$) zu der OFE einer Schnittfläche der erfindungsgemäßen Polyurethangießelastomere ($OFE_{Bulk}$) ergibt, $\leq$ 0,85 ist, wobei die jeweilige Oberflächenenergie in Anlehnung an Norm DIN 55660-2 bestimmt ist.

**4.** Verfahren zur Herstellung eines Polyurethangießelastomers umfassend die Umsetzung der Komponenten (i) bis (iii):

(i) eine Diisocyanatzusammensetzung;
(ii) eine Polyolzusammensetzung, umfassend

(ii.1) mindestens ein zweifunktionales Polyester- oder Polyetherpolyol,
(ii.2) mindestens ein Polysiloxan der allgemeinen Formel I

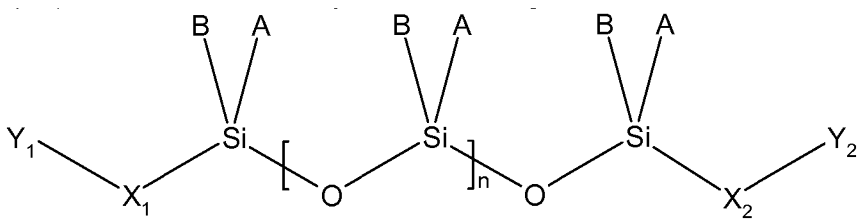

(I),

wobei n eine ganze Zahl im Bereich von 1 bis 250 ist, A und B unabhängig voneinander ausgewählt sind aus der Gruppe der C1-C20-Alkylgruppen; $X_1$ eine $(CH_2-CH_2-O)_m$-Gruppe, eine $(CH_2-CH_2-CH_2-O)_m$-Gruppe oder eine (CHCH$_3$-CH$_2$-O)m-Gruppe ist, $X_2$ eine $(O-CH_2-CH_2)_m$-Gruppe eine $(O-CH_2-CH_2-CH_2)_m$-Gruppe oder eine $(O-CH_2-CHCH_3)_m$-Gruppe ist, wobei m für $X_1$, $X_2$ jeweils unabhängig eine ganze Zahl im Bereich von 2 bis 20 ist; und $Y_1$ und $Y_2$ beide eine Hydroxylgruppe sind;

(iii) eine Kettenverlängererzusammensetzung.

**5.** Verfahren zur Herstellung eines Polyurethangießelastomers gemäß Anspruch 4, umfassend

(a) Umsetzen der Polyisocyanatzusammensetzung (i) mit gegebenenfalls dem mindestens einen Polyester- oder Polyetherpolyol (ii.1) bzw. gegebenenfalls einem Teil des mindestens einen Polyester- oder Polyetherpolyols (ii.1) und gegebenenfalls dem mindestens einen Polysiloxans (ii.2) bzw. gegebenenfalls einem Teil des mindestens einen Polysiloxans (ii.2) zu einem isocyanatterminierten Prepolymer (ia);
(b) Umsetzen des in (a) erhaltenen isocyanatterminierten Prepolymers mit gegebenenfalls dem mindestens einem Polyester- oder Polyetherpolyol (ii.1) bzw. gegebenenfalls verbliebenem Teil des mindestens einen Polyester- oder Polyetherpolyols (ii.1) und gegebenenfalls dem mindestens ein Polysiloxan (ii.2) bzw. dem gegebenenfalls verbliebenen Teil des mindestens einen Polysiloxans und dem Kettenverlängerer (iii).

**6.** Verwendung eines Polyurethangießelastomers gemäß einem der Ansprüche 1 bis 3 oder eines Polyurethangießelastomers erhältlich oder erhalten nach dem Verfahren gemäß Anspruch 4 oder 5 zur Herstellung eines Formkörpers.

**7.** Verwendung eines Polyurethangießelastomers gemäß einem der Ansprüche 1 bis 3 oder eines Polyurethangießelastomers erhältlich oder erhalten nach dem Verfahren gemäß Anspruch 4 oder 5 zur Herstellung eines formgebenden Körpers.

**8.** Verwendung gemäß Anspruch 7 für einen formgebenden Körper für industrielle Anwendungen, bevorzugt für Scheibenumguss.

**9.** Formkörper oder formgebender Körper, umfassend ein Polyurethangießelastomer gemäß einem der Ansprüche 1 bis 3 oder ein Polyurethangießelastomer erhältlich oder erhalten nach dem Verfahren gemäß Anspruch 4 oder 5.

**10.** Verwendung eines Polyurethangießelastomers gemäß einem der Ansprüche 1 bis 3 oder eines Polyurethangießelastomers erhältlich oder erhalten nach dem Verfahren gemäß Anspruch 4 oder 5 zur Herstellung eines umgossenen Formkörpers, insbesondere als formgebender Körper in der Herstellung eines umgossenen Formkörpers.

**11.** Verfahren zur Herstellung eines umgossenen Formkörpers, umfassend

a) Bereitstellen eines formgebenden Körpers, umfassend ein Polyurethangießeleastomer gemäß einem der Ansprüche 1 bis 3 und eines mit einer Dichtung zu versehenden Substrats;
b) Anordnen des formgebenden Körpers gemäß a) und des mit einer Dichtung zu versehenden Substrats gemäß a) derart, dass zwischen formgebenden Körper und Substrat ein Hohlraum gebildet wird;
c) Einbringen einer Polyurethanzusammensetzung, welche eine dynamische Viskosität, die bei einer Scherrate von 1/s gemäß DIN 53019 gemessen wird, von weniger als 35.000 mPa.s aufweist, in den Hohlraum und Aushärten der Polyurethanzusammensetzung im Hohlraum zur Ausformung einer Dichtung am Substrat;
d) optional Entfernen des formgebenden Körpers.

**Claims**

**1.** A polyurethane cast elastomer obtainable or obtained by reaction of at least the components (i) to (iii):

(i) a polyisocyanate composition;
(ii) a polyol composition comprising

(ii.1) at least one di- or trifunctional polyester or polyether polyol
(ii.2) at least one polysiloxane of general formula I

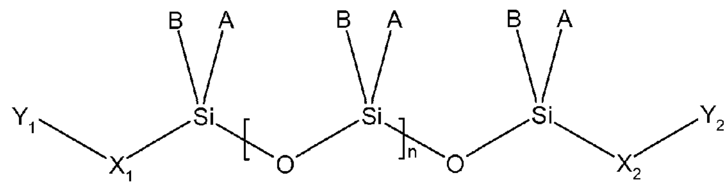
(I),

wherein n is an integer in the range from 1 to 250, A and B are independently of one another selected from the group of C1-C20-alkyl groups; wherein $X_1$ is a $(CH_2\text{-}CH_2\text{-}O)_m$ group, a $(CH_2\text{-}CH_2\text{-}CH_2\text{-}O)_m$ group or a $(CHCH_3\text{-}CH_2\text{-}O)_m$ group, $X_2$ is an $(O\text{-}CH_2\text{-}CH_2)_m$ group, an $(O\text{-}CH_2\text{-}CH_2\text{-}CH_2)_m$ group or an $(O\text{-}CH_2\text{-}CHCH_3)_m$ group, wherein m for $X_1$, $X_2$ are each independently an integer in the range from 2 to 20; and $Y_1$ and $Y_2$ are both a hydroxyl group;

(iii) a chain extender composition.

**2.** The polyurethane cast elastomer according to claim 1, wherein the polyisocyanate composition (i) in the form of an isocyanate-terminated prepolymer (ia) obtained or obtainable from the reaction of polyisocyanate composition (i) with optionally the at least one polyester or polyether polyol (ii.1)/optionally a portion of the at least one polyester or polyether polyol (ii.1) and optionally the at least one polysiloxane (ii.2)/optionally a portion of the at least one polysiloxane (ii.2) and the polyurethane cast elastomer is obtained or obtainable by reaction of at least the components

(ia) isocyanate-terminated prepolymer;
(ii.1) optionally at least one polyester or polyether polyol/optionally the remaining portion of the at least one polyester or polyether polyol (ii.1),

(ii.2) optionally at least one polysiloxane (ii.2)/optionally the remaining portion of the at least one polysiloxane;
(iii) chain extender.

3. The polyurethane cast elastomer according to claim 1 or 2, wherein the factor $F_{OFE}$, which results from the ratio of the surface energy (OFE) of the cleaned side ($OFE_{ger}$) to the OFE of a cross-sectional surface of the polyurethane cast elastomers according to the invention ($OFE_{Bulk}$), is ≤ 0.85, wherein the respective surface energy is determined based on the standard DIN 55660-2.

4. A process for producing a polyurethane cast elastomer comprising the reaction of the components (i) to (iii):

(i) a diisocyanate composition;
(ii) a polyol composition comprising

(ii.1) at least one difunctional polyester or polyether polyol
(ii.2) at least one polysiloxane of general formula I

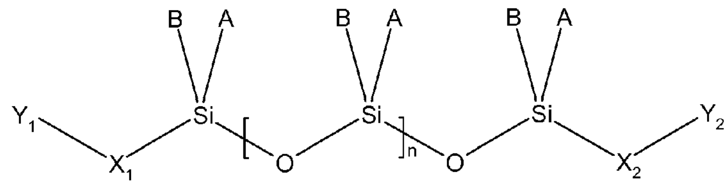

(I),

wherein n is an integer in the range from 1 to 250, A and B are independently of one another selected from the group of C1-C20-alkyl groups; $X_1$ is a $(CH_2-CH_2-O)_m$ group, a $(CH_2-CH_2-CH_2-O)_m$ group or a $(CHCH_3-CH_2-O)_m$ group, $X_2$ is an $(O-CH_2-CH_2)_m$ group, an $(O-CH_2-CH_2-CH_2)_m$ group or an $(O-CH_2-CHCH_3)_m$ group, wherein m for $X_1$, $X_2$ are each independently an integer in the range from 2 to 20; and $Y_1$ and $Y_2$ are both a hydroxyl group;

(iii) a chain extender composition.

5. The process for producing a polyurethane cast elastomer according to claim 4, comprising

(a) reacting the polyisocyanate composition (i) with optionally the at least one polyester or polyether polyol (ii.1)/optionally a portion of the at least one polyester or polyether polyol (ii.1) and optionally the at least one polysiloxane (ii.2)/optionally a portion of the at least one polysiloxane (ii.2) to afford an isocyanate-terminated prepolymer (ia);
(b) reacting the isocyanate-terminated prepolymer obtained in (a) with optionally the at least one polyester or polyether polyol (ii.1)/optionally the remaining portion of the at least one polyester or polyether polyol (ii.1) and optionally the at least one polysiloxane (ii.2)/optionally the remaining portion of the at least one polysiloxane and the chain extender (iii).

6. The use of a polyurethane cast elastomer according to any of claims 1 to 3 or a polyurethane cast elastomer obtainable or obtained by the process according to claim 4 or 5 for producing a shaped body.

7. The use of a polyurethane cast elastomer according to any of claims 1 to 3 or a polyurethane cast elastomer obtainable or obtained by the process according to claim 4 or 5 for producing a shape-conferring body.

8. The use according to claim 7 for a shape-conferring body for industrial applications, preferably for glass encapsulation.

9. A shaped body or shape-conferring body, comprising a polyurethane cast elastomer according to any of claims 1 to 3 or a polyurethane cast elastomer obtainable or obtained by the process according to claim 4 or 5.

10. The use of a polyurethane cast elastomer according to any of claims 1 to 3 or a polyurethane cast elastomer obtainable or obtained by the process according to claim 4 or 5 for producing an encapsulated shaped body, in particular as a shape-conferring body in the production of an encapsulated shaped body.

**11.** A process for producing an encapsulated shaped body, comprising

a) providing a shape-conferring body, comprising a polyurethane cast elastomer according to any of claims 1 to 3 and a substrate to be provided with a seal;
b) arranging the shape-conferring body according to a) and the substrate to be provided with a seal according to a) in such a way that a cavity is formed between the shape-conferring body and a substrate;
c) introducing a polyurethane composition having a dynamic viscosity measured at a shear rate of 1/s according to DIN 53019 of less than 35 000 mPa.s into the cavity and curing the polyurethane composition in the cavity to form a seal on the substrate;
d) optionally removing the shape-conferring body.

**Revendications**

**1.** Élastomère coulé de polyuréthane, pouvant être obtenu ou obtenu par transformation d'au moins les composants (i) à (iii) :

(i) une composition de polyisocyanate ;
(ii) une composition de polyol, comprenant

(ii.1) au moins un polyesterpolyol ou un polyétherpolyol bifonctionnel ou trifonctionnel,
(ii.2) au moins un polysiloxane de formule générale I

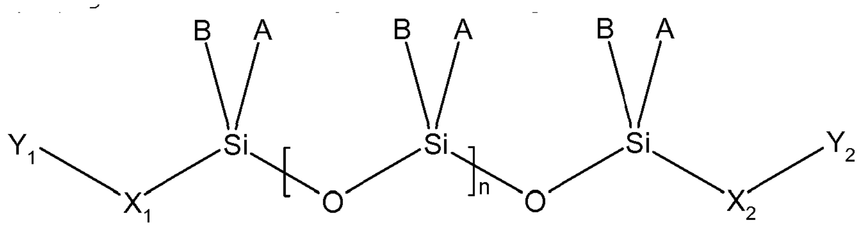

(I),

n représentant un nombre entier dans la plage de 1 à 250, A et B étant choisis, indépendamment l'un de l'autre, dans le groupe des groupements $C_1$-$C_{20}$-alkyle ; $X_1$ représentant un groupement $(CH_2\text{-}CH_2\text{-}O)_m$, un groupement $(CH_2\text{-}CH_2\text{-}CH_2\text{-}O)_m$ ou un groupement $(CHCH_3\text{-}CH_2\text{-}O)_m$, $X_2$ représentant un groupement $(O\text{-}CH_2\text{-}CH_2)_m$, un groupement $(O\text{-}CH_2\text{-}CH_2\text{-}CH_2)_m$ ou un groupement $(O\text{-}CH_2\text{-}CHCH_3)_m$, m pour $X_1$, $X_2$ représentant à chaque fois indépendamment un nombre entier dans la plage de 2 à 20 ; et $Y_1$ et $Y_2$ représentant tous les deux un groupement hydroxyle ;

(iii) une composition d'agent d'allongement de chaîne.

**2.** Élastomère coulé de polyuréthane selon la revendication 1, la composition de polyisocyanate (i) sous forme d'un prépolymère terminé par isocyanate (ia), obtenu ou pouvant être obtenu à partir de la transformation de la composition de polyisocyanate (i) avec le cas échéant ledit au moins un polyesterpolyol ou polyétherpolyol (ii.1) ou le cas échéant une partie dudit au moins un polyesterpolyol ou polyétherpolyol (ii.1) et le cas échéant ledit au moins un polysiloxane (ii.2) ou le cas échéant une partie dudit au moins un polysiloxane (ii.2) et l'élastomère coulé de polyuréthane étant obtenu ou pouvant être obtenu par transformation d'au moins les composants

(ia) prépolymère terminé par isocyanate ;

(ii.1) le cas échéant au moins un polyesterpolyol ou polyétherpolyol ou le cas échéant la partie restante dudit au moins un polyesterpolyol ou polyétherpolyol (ii.1),
(ii.2) le cas échéant au moins un polysiloxane (ii.2) ou le cas échéant la partie restante dudit au moins un polysiloxane ;

(iii) agent d'allongement de chaîne.

**3.** Élastomère coulé de polyuréthane selon la revendication 1 ou 2, le facteur $F_{OFE}$, qui est obtenu à partir du rapport

de l'énergie de surface (OFE) du côté nettoyé ($OFE_{ger}$) à l'OFE d'une surface coupée de l'élastomère coulé de polyuréthane selon l'invention ($OFE_{Bulk}$), étant ≤ 0,85, l'énergie de surface respective étant déterminée selon la norme DIN 55660-2.

**4.** Procédé pour la préparation d'un élastomère coulé de polyuréthane, comprenant la transformation des composants (i) à (iii) :

(i) une composition de diisocyanate ;
(ii) une composition de polyol, comprenant

(ii.1) au moins un polyesterpolyol et/ou polyétherpolyol bifonctionnel,
(ii.2) au moins un polysiloxane de formule générale I

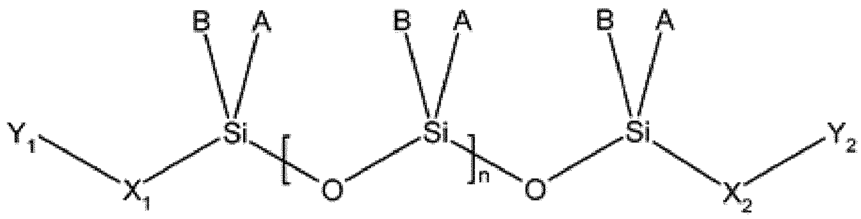

(I),

n représentant un nombre entier dans la plage de 1 à 250, A et B étant choisis, indépendamment l'un de l'autre, dans le groupe des groupements $C_1$-$C_{20}$-alkyle ; $X_1$ représentant un groupement $(CH_2\text{-}CH_2\text{-}O)_m$, un groupement $(CH_2\text{-}CH_2\text{-}CH_2\text{-}O)_m$ ou un groupement ($CHCH_3$-$CH_2$-O)m, $X_2$ représentant un groupement $(O\text{-}CH_2\text{-}CH_2)_m$, un groupement $(O\text{-}CH_2\text{-}CH_2\text{-}CH_2)_m$ ou un groupement $(O\text{-}CH_2\text{-}CHCH_3)_m$, m pour $X_1$, $X_2$ représentant à chaque fois indépendamment un nombre entier dans la plage de 2 à 20 ; et $Y_1$ et $Y_2$ représentant tous les deux un groupement hydroxyle ;

(iii) une composition d'agent d'allongement de chaîne.

**5.** Procédé pour la préparation d'un élastomère coulé de polyuréthane selon la revendication 4, comprenant

(a) la transformation de la composition de polyisocyanate (i) avec le cas échéant ledit au moins un polyesterpolyol ou polyétherpolyol (ii.1) ou le cas échéant une partie dudit au moins un polyesterpolyol ou polyétherpolyol (ii.1) et le cas échéant ledit au moins un polysiloxane (ii.2) ou le cas échéant une partie dudit au moins un polysiloxane (ii.2) en un prépolymère terminé par isocyanate (ia) ;
(b) la transformation du prépolymère terminé par isocyanate obtenu dans (a) avec le cas échéant ledit au moins un polyesterpolyol ou polyétherpolyol (ii.1) ou le cas échéant la partie restant dudit au moins un polyesterpolyol ou polyétherpolyol (ii.1) et le cas échéant ledit au moins un polysiloxane (ii.2) ou le cas échéant la partie restante dudit au moins un polysiloxane et l'agent d'allongement de chaîne (iii).

**6.** Utilisation d'un élastomère coulé de polyuréthane selon l'une quelconque des revendications 1 à 3 ou d'un élastomère coulé de polyuréthane pouvant être obtenu ou obtenu selon le procédé selon la revendication 4 ou 5 pour la préparation d'un corps façonné.

**7.** Utilisation d'un élastomère coulé de polyuréthane selon l'une quelconque des revendications 1 à 3 ou d'un élastomère coulé de polyuréthane pouvant être obtenu ou obtenu selon le procédé selon la revendication 4 ou 5 pour la préparation d'un corps de moulage.

**8.** Utilisation selon la revendication 7 pour un corps de moulage destiné à des utilisations industrielles, de préférence pour le surmoulage de vitres.

**9.** Corps façonné ou corps de moulage, comprenant un élastomère coulé de polyuréthane selon l'une quelconque des revendications 1 à 3 ou un élastomère coulé de polyuréthane pouvant être obtenu ou obtenu selon le procédé selon la revendication 4 ou 5.

**10.** Utilisation d'un élastomère coulé de polyuréthane selon l'une quelconque des revendications 1 à 3 ou d'un élastomère

coulé de polyuréthane pouvant être obtenu ou obtenu selon le procédé selon la revendication 4 ou 5 pour la préparation d'un corps façonné surmoulé, en particulier sous forme de corps de moulage dans la fabrication d'un corps façonné surmoulé.

**11.** Procédé de fabrication d'un corps façonné surmoulé, comprenant

a) la mise à disposition d'un corps de moulage, comprenant un élastomère coulé de polyuréthane selon l'une quelconque des revendications 1 à 3 et d'un substrat à pourvoir d'un joint ;
b) l'agencement du corps de moulage selon a) et du substrat à pourvoir d'un joint selon a) de manière telle qu'un espace creux est formé entre le corps de moulage et le substrat ;
c) l'introduction d'une composition de polyuréthane, qui présente une viscosité dynamique, mesurée à un taux de cisaillement de 1/s selon DIN 53019, inférieure à 35.000 mPa.s, dans l'espace creux et durcissement de la composition de polyuréthane dans l'espace creux pour la formation d'un joint sur le substrat ;
d) éventuellement l'élimination du corps de moulage.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1577080 B1
- EP 2799201 A1


### In der Beschreibung aufgeführte Nicht-Patentliteratur


- Polyurethane. Kunststoffhandbuch. Carl Hanser Verlag, 1993, vol. 7
- Kunststoffhandbuch. Carl Hanser Verlag, 1966, vol. 7, 103-113